(19) Europäisches Patentamt
European Patent Office
Office européen des brevets

(11) Veröffentlichungsnummer: **0 327 006 B1**

(12) **EUROPÄISCHE PATENTSCHRIFT**

(45) Veröffentlichungstag der Patentschrift: **20.01.93**

(51) Int. Cl.5: **C09D 5/02**, C09D 123/00

(21) Anmeldenummer: **89101595.0**

(22) Anmeldetag: **31.01.89**

# (54) Emissionsarme Dipersionsfarben, Anstrichmittel und Kunststoffdispersionsputze sowie Verfahren zu ihrer Herstellung.

(30) Priorität: **05.02.88 DE 3803450**

(43) Veröffentlichungstag der Anmeldung:
**09.08.89 Patentblatt 89/32**

(45) Bekanntmachung des Hinweises auf die Patenterteilung:
**20.01.93 Patentblatt 93/03**

(84) Benannte Vertragsstaaten:
**AT BE CH DE ES FR GB IT LI LU NL SE**

(56) Entgegenhaltungen:
**DE-A- 2 148 457**
**US-A- 3 814 716**

(73) Patentinhaber: **HOECHST AKTIENGESELLSCHAFT**
**Postfach 80 03 20**
**W-6230 Frankfurt am Main 80(DE)**

(72) Erfinder: **Nölken, Ernst, Dr.**
**Dachbergstrasse 16a**
**W-6232 Bad Soden am Taunus(DE)**
Erfinder: **Braun, Helmut, Dr.**
**Königsberger Strasse 74**
**W-6239 Kriftel(DE)**
Erfinder: **Lonitz, Michael, Dr.**
**Weinstrasse 23**
**W-6531 Trechtingshausen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft emissionsarme Dispersionsfarben, Anstrichmittel und Kunststoff-Dispersions-Putze in Form von wäßrigen Zubereitungen auf Basis von wäßrigen Kunststoffdispersionen mit einer Pigmentvolumenkonzentration (PVK) von mindestens 60 %, die frei sind von organischen Lösungsmitteln bzw. flüchtigen organischen Filmbildungshilfsmitteln und niedermolekularen Weichmachern und die frei sind von leichtflüchtigen nichtwäßrigen Bestandteilen und frei von geruchsstörenden Nebenprodukten, ferner Verfahren zu deren Herstellung und deren Verwendung als Bautenschutzmittel bzw. als Baustoffe, insbesondere in unzureichend belüfteten und in bewohnten Räumen.

Zur Reduzierung der Umweltbelastung durch Schadstoffe ist es häufig wünschenswert, daß wäßrige Dispersionsfarben, Anstrichmittel und Kunststoff-Dispersions-Putze bei ihrer Anwendung im Freien oder insbesondere in geschlossenen Räumen außer Wasser keine nichtwäßrigen flüchtigen organischen oder anorganischen Bestandteile freisetzen können.

Nach dem Stand der Technik enthalten jedoch Bautenschutzmittel wie z.B. Dispersionsfarben, Putze, Spachtelmassen und Fließenkleber mehr oder weniger große Mengen an Lösungsmitteln. Die hier als Lösungs- bzw. Filmkonsolidierungs- bzw. Filmbildungshilfsmittel oder auch als Weichmacher eingesetzten leichflüchtigen oder mittel- bis schwerflüchtigen Zusatzstoffe sind zur Erzielung der geforderten anwendungstechnischen Eigenschaften der Bautenschutzmittel im allgemeinen unentbehrlich. Um hohe Naßabriebfestigkeit, mechanische Beständigkeit, geringe Anschmutzneigung und geringe Blockneigung bei den angewandten Mitteln zu erreichen, war es bisher nicht möglich, Dispersionspolymerisate mit einer Einfrier- oder Glastemperatur (Tg) bzw. einer Mindestfilmbildungstemperatur (MFT) ihrer wäßrigen Dispersionen von nahe 0 °C einzusetzen. Diese Gebrauchseigenschaften konnten daher nur durch den Einsatz von Polymerdispersionen mit einer Tg bzw. MFT von deutlich über 0 °C unter Mitverwendung von Filmbildungshilfsmitteln, die die Tg bzw. MFT herabsetzen, erreicht werden, so daß eine Anwendung auch bei 5 °C und gegebenenfalls darunter möglich ist. Filmbildungshilfsmittel und temporäre Weichmacher gehen aber beim Trocknen der Mittel in die sie umgebende Luft, was insbesondere bei Innenfarben z. B. durch den Geruch störend oder durch das Einatmen bei empfindlichen Menschen toxikologisch bedenklich sein kann.

Es wurden in der Vergangenheit auch permanente Weichmacher verwendet. Nachteile können hierbei durch erhöhte Klebrigkeit, Weichmacherwanderung und auch durch eventuelle Flüchtigkeit entstehen.

Es wurden auch Versuche unternommen, Vinylacetatdispersionscopolymerisate, insbesondere Vinylacetat/Ethylen-Copolymerisatdispersionen, einzusetzen, die eine Tg bzw. MFT nahe 0 °C besitzen.

Es zeigte sich aber, daß das Pigmentbindevermögen solcher Dispersionen eingeschränkt ist gegenüber Systemen mit Bindemitteln aus härteren Dispersionscopolymerisaten mit Zusätzen von Filmkonsolidierungsmitteln.

Der vorliegenden Erfindung lag somit die Aufgabe zugrunde, solche wäßrigen Dispersionsfarben, Anstrichmittel und Putze zur Verfügung zu stellen, die außer Wasser keine nennenswerten Anteile an nichtwäßrigen flüchtigen Verbindungen enthalten und als Bindemittel Kunststoffdispersionen enthalten, die frei sind von Filmbildungshilfsmitteln und die per se ein hohes Pigmentbindevermögen und deren Filme außerdem eine geringe Anschmutzneigung und geringe Blockneigung auch bei niedriger Tg bzw. niedriger MFT der Dispersion besitzen.

Es wurde nun überraschenderweise gefunden, daß man die vorgenannten Schwierigkeiten überwinden kann, wenn man Dispersionen solcher Kunststoffdispersionscopolymerisate verwendet, deren copolymere Makromoleküle geringe Mengen von Monomereinheiten aus ungesättigten hydrolysierbaren organischen Siliciumverbindungen enthalten und die die erforderlichen Tg- bzw. MFT-Werte aufweisen und die Dispersionen außerdem praktisch frei sind von flüchtigen nichtwäßrigen organischen und/oder anorganischen Bestandteilen.

Gegenstand der Erfindung sind daher emissionsarme Dispersionsfarben, Anstrichmittel und Kunststoff-Dispersions-Putze in Form von wäßrigen Zubereitungen auf der Basis von wäßrigen Kunststoffdispersionspolymerisaten aus olefinisch ungesättigten Monomeren mit einer Pigmentvolumenkonzentration (PVK) von mindestens 60 %, enthaltend Wasser, Füllstoffe, Pigmente, Kunststoffdispersionspolymerisate und Hilfsmittel aus der Gruppe Netzmittel, Dispergiermittel, Emulgatoren, Schutzkolloide, Verdickungsmittel, Entschäumer, Farbstoffe und Konservierungsmittel, dadurch gekennzeichnet, daß der nichtflüchtige Anteil der wäßrigen Zubereitungen, bezogen auf den gesamten nichtflüchtigen Anteil,

35 bis 94 Gew.-% Füllstoff,
2 bis 30 Gew.-% Pigment,
0,1 bis 10 Gew.-% Hilfsmittel und
4 bis 35 Gew.-% Kunststoffdispersionscopolymerisat, dessen wäßrige Dispersion eine Mindestfilmbildungstemperatur (MFT) von < 10 °C, vorzugsweise < 5 °C, insbesondere < 2 °C, aufweist, enthält, und das

Kunststoffdispersionscopolymerisat einen Gehalt von 0,05 bis 2 Gew.-%, vorzugsweise 0,1 bis 0,4 Gew.-%, insbesondere 0,05 bis 0,2 Gew.-%, bezogen auf das Kunststoffdispersionscopolymerisat, an Monomereinheiten aus ungesättigten hydrolysierbaren organischen Siliciumverbindungen der Formel I,

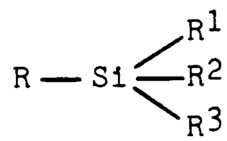

(I)

worin R ein in ω-Stellung olefinisch ungesättigter organischer Rest und $R^1$, $R^2$, $R^3$, die gleich oder verschieden sein können, Halogen, vorzugsweise Chlor, oder die Gruppe -OZ, wobei Z primäre oder sekundäre gegebenenfalls mit Alkoxygruppen substituierte Alkyl-oder Acylreste oder Wasserstoff bedeutet, besitzt, der Gehalt der wäßrigen Zubereitungen an flüchtigen nichtwäßrigen Bestandteilen < 0,1 Gew.-%, vorzugsweise < 0,05 Gew.-%, bezogen auf den gesamten nichtflüchtigen Anteil, beträgt und der pH-Wert der wäßrigen Zubereitungen im Bereich von 5,5 bis 10, vorzugsweise 7 bis 9, insbesondere 8 bis 9, liegt.

Eine bevorzugte Ausführungsform der Erfindung besteht darin, daß das verwendete Kunststoffdispersionscopolymerisat neben Monomereinheiten aus Verbindungen der Formel I Monomereinheiten aus der Gruppe Vinylester, Vinylester/Ethylen, Vinylester/Vinylchlorid/Ethylen, Vinylester/Versaticsäurevinylester, Vinlyester/Acrylester, Acrylester/Versaticsäurevinylester/Ethylen enthält.

Bevorzugte Verbindungen der Formel I sind z. B. γ-Acryloxypropyl-trimethoxysilan, γ-Methacryloxypropyltrimethoxysilan, Vinyl-trimethoxysilan, Vinyl-triethoxysilan, Vinyl-trimethylglykolsilan, Vinyl-triacetoxysilan, Vinyltrichlorsilan, Vinylmethyldichlorsilan und γ-Methacryloxypropyltris-(2-methoxyethoxy)-silan.

Eine besondere Variante der Erfindung besteht darin, daß das verwendete Kunststoffdispersionscopolymerisat aus Gemischen von Dispersionscopolymerisaten besteht, von denen ein Teil keine Monomereinheiten der Formel I enthält und ein anderer Teil Monomereinheiten der Formel I in einer solchen Menge enthält, daß der durchschnittliche Gehalt an Monomereinheiten der Formel I in dem gesamten Dispersionscopolymerisatgemisch 0,05 bis 2 Gew.-%, vorzugsweise 0,1 bis 0,4 Gew.-%, insbesondere 0,05 bis 0,2 Gew.-%, bezogen auf das gesamte Kunststoffdispersionscopolymerisatgemisch, beträgt.

Ein besonderes erfindungsgemäßes Merkmal besteht ferner darin, daß die erfindungsgemäßen wäßrigen Zubereitungen frei sind von leichtflüchtigen Restmonomeren, von niederen Alkoholen sowie von Ammoniak und/oder flüchtige Amine oder von gegebenenfalls $H_2S$ oder Merkaptane abspaltenden Komponenten und der Gehalt der wäßrigen Zubereitungen an flüchtigen nichtwäßrigen Bestandteilen insgesamt < 0,05 Gew.-%, bezogen auf den gesamten nichtflüchtigen Anteil, beträgt.

Die Herstellung von Kunststoffcopolymerisatdispersionen, bei denen die Monomeren mit hydrolysierbaren, ungesättigten, organischen Siliciumverbindungen der Formel I copolymerisiert werden, ist bekannt.

Aus der US-PS 3,729,438 sind Kunststoffdispersionen auf Basis Vinylacetat mit 0,5 bis 1 Gew.-%, bezogen auf die Gesamtmonomerenmenge, eines copolymerisierbaren Silans, wie z. B. Vinlytrimethoxysilan, γ-Methacryloxypropyl-trimethoxysilan und Vinyl-tris(2-methoxy-ethoxy)-silan bekannt. Beim Trocknen vernetzt das Polymere und man erhält einen klaren, hochglänzenden Film.

In der US-PS 3,814,716 werden Kunststoffdispersionen auf Basis Vinylacetat, Acrylestern, Malein- und Fumarsäureestern mit 0,5 bis 5 Gew.-% eines copolymerisierbaren Silan beschrieben. Beim Trocknen der Kunststoffdispersionen erhält man klare, hochglänzende und vernetzte Filme mit ausgezeichneter Beständigkeit gegenüber Wasser und Lösungsmitteln.

Aus der DE-PS 21 48 457 ist die Verwendung von polymeren Bindemitteln in wäßriger Dispersion zur Herstellung von Bautenbeschichtungsmitteln bekannt, wobei die Kunststoffdispersionen Polymerisate aus Vinylestern, Acrylestern oder Butadien/Styrol-Copolymeren enthalten, in die Silanolgruppen einpolymerisiert sind.

Aus der DE-PS 21 48 458 ist die Herstellung wäßriger Kunststoffdispersionen auf Basis von Vinylestern von Carbonsäuren mit 2 bis 18 C-Atomen, Ethylen, gegebenenfalls bis zu 25 Gew.-% weiteren olefinisch ungesättigten Monomeren und 0,3 bis 5 Gew.-%, bezogen auf die gesamte Monomerenmenge, einer ungesättigten hydrolysierbaren organischen Siliciumverbindung bekannt. Filme aus den beschriebenen Kunststoffdispersionen zeigen bei Copolymerisaten mit Gehalten von 1 bis 2 Gew.-% der obengenanten Si-Verbindungen auf Glas und Asbestzement hohe Trocken- und Naßschälfestigkeiten. Die nach Beispiel 1 der o.g. DE-PS hergestellte Kunststoffdispersion besitzt jedoch einen Gehalt an nicht umgesetzten monomeren Vinylacetat von 0,2 Gew.-%, die nach den Beispielen 6 und 10 hergestellten Kunststoffdispersionen enthalten 3,8 bzw. 4,8 Gew.-% Methanol, jeweils bezogen auf den Polymerisatanteil.

Aus dem vorstehend genannten Stand der Technik läßt sich nicht ohne weiteres erkennen oder

herleiten, daß silanolgruppenhaltige Kunststoffdispersionen außer zu einem hohen Pigmentbindevermögen in Dispersionsfarben auch zu einer Verbesserung des Nichtausreißens bei den damit hergestellten Anstrichen und außerdem trotz niedriger Tg bzw. niedriger MFT zu einer geringen Anschmutzneigung und geringen Blockneigung bei den daraus hergestellten Filmen bzw. Anstrichen führen können.

Es war daher um so überraschender, daß bei Bindemitteln auf Basis von Kunststoffdispersionen mit niedriger MFT in Abwesenheit von flüchtigen organischen Filmbildungshilfsmitteln insbesondere dann eine besondere Verbesserung der Bindemitteleigenschaften erreicht wird, wenn die Dispersionscopolymerisate nur sehr kleine Mengen an Monomereinheiten mit Silanolgruppen aus Verbindungen der Formel I enthalten, wobei Mengen von 0,1 bis 0,4 Gew.-%, bezogen auf die Gesamtmonomerenmenge, bevorzugt sind.

Eine bevorzugte Ausführungsform der vorliegenden Erfindung besteht ferner darin, daß das in den wäßrigen Zubereitungen enthaltene und Siliciumreste an den Monomereinheiten der Formel I tragende Kunststoffdispersionscopolymerisat durch radikalisch initiierte Copolymerisation der fein verteilten Monomeren mit einem Anteil von 0,05 bis 2 Gew.-%, vorzugsweise 0,1 bis 0,4 Gew.-%, insbesondere 0,05 bis 0,2 Gew.-%, bezogen auf die Gesamtmonomerenmenge, an Monomeren der Formel I in wäßrigem Medium unter Mitverwendung von Hydroxyethylcellulose, nichtionischen Emulgatoren und monomerem Natriumvinylsulfonat als Emulgator/Schutzkolloidsystem hergestellt wurde und die durch Hydrolyse aus den Monomereinheiten der Formel I in der wäßrigen Dispersion gegebenenfalls entstandenen flüchtigen Alkoholkomponenten sowie gegebenenfalls vorhandene flüchtige Restmonomeranteile nach beendeter Polymerisationsreaktion mit physikalischen Methoden. vorzugsweise durch Destillation unter vermindertem Druck, entfernt worden sind.

Bei der Herstellung der Kunststoffdispersionscopolymerisate z.B. durch Emulsionspolymerisation hydrolysieren die Alkoxy-, Acyloxy- und Halogen-Reste der eingesetzten Siliciumverbindungen der Formel I zumindest teilweise zu hydroxygruppenhaltigen Siliciumverbindungen (Silanolgruppen), die dann im Copolymerisat enthalten sind und zu Vernetzungen zwischen den Makromolekülen führen können.

Als hydrolysierbare ungesättigte organische Siliciumverbindungen der Formel I kommen vorzugsweise solche in Frage, bei denen in Formel I der Rest R für ein $\omega$-ungesättigtes Alkenyl mit 2 bis 10 C-Atomen, insbesondere 2 bis 4 C-Atomen, oder einen $\omega$-ungesättigten Carbonsäureester aus ungesättigten Carbonsäuren mit bis zu 4 C-Atomen und die Si-Gruppe tragenden Alkoholen mit bis zu 6 C-Atomen steht. Als Reste $R^1$, $R^2$, $R^3$ kommen bevorzugt Halogen, insbesondere Chlor, und die Gruppe -OZ, wobei Z für primäre und/oder sekundäre Alkylreste mit bis zu 10 C-Atomen, vorzugsweise bis zu 4 C-Atomen, oder mit Alkoxygruppen, vorzugsweise mit bis zu 3 C-Atomen, substituierte Alkylreste oder für Acylreste mit bis zu 6 C-Atomen, vorzugsweise bis zu 3 C-Atomen, oder für Wasserstoff steht, in Frage.
Beispiele solcher Verbindungen der Formel I sind Vinyltrichlorsilan, Vinylmethyldichlorsilan, $\gamma$-Methacryloxypropyltris-(2-methoxyethoxy)-silan, Vinylmethoxysilan, Vinyltriethoxysilan, Vinyldiethoxysilanol, Vinylethoxysilandiol, Allyltriethoxysilan, Vinyltripropoxysilan, Vinyltriisopropoxysilan, Vinyltributoxysilan, Vinyltriacetoxysilan, Trimethylglykol-vinylsilan, $\gamma$-Methacryloxypropyl-trimethylglykolsilan, $\gamma$-Acryloxypropyltriethoxysilan, $\gamma$-Methacryloxypropyl-trimethoxysilan.

Die Entfernung von Restmonomeren in den erfindungsgemäß verwendeten Kunststoffcopolymerisatdispersionen kann auch durch Anwendung von bekannten chemischen Methoden, wie z. B. durch radikalisch initiierte, vorzugsweise mit Redoxkatalysatoren initiierte, Nachpolymerisation erfolgen. Falls danach noch Spuren von flüchtigen Monomeranteilen in der Dispersion vorhanden sein sollten, so lassen sich diese unschwer durch andere Methoden, vorzugsweise physikalische Methoden, insbesondere durch Destillation, bevorzugt unter vermindertem Druck und gegebenenfalls unter Durchleiten oder Überleiten von inerten Schleppgasen, wie z. B. Luft, Stickstoff, $CO_2$ oder Wasserdampf, entfernen.

Ein besonderes Charakteristikum der vorliegenden Erfindung besteht auch darin, daß die erfindungsgemäß verwendeten Kunststoffcopolymerisatdispersionen nicht nur frei sind von flüchtigen Restmonomeranteilen, sondern daß durch die vorerwähnte Nachbehandlung mit chemischen und/oder physikalischen Methoden auch die aus der Hydrolyse der verwendeten Comonomeren der Formel I gegebenenfalls entstehenden bzw. entstandenen flüchtigen Alkohole, wie z. B. Methanol, Methoxyethanol oder Isopropanol, entfernt worden sind. Dies kann z. B. der Verwendung von Vinyltrimethoxysilan als Comonomeres von entscheidender Bedeutung sein, da der durch Hydrolyse entstandene Methanolgehalt in der resultierenden Dispersion der Verwendung der Dispersion aus toxikologischen Gründen entgegenstehen kann, falls der Methanolgehalt nicht zuvor eliminiert wurde.

Die erfindungsgemäßen wäßrigen Zubereitungen enthalten in ihrer endgültigen Zusammensetzung für den Einsatz als Bautenschutzmittel als Baustoffe zusätzlich zu den Bestandteilen aus der Kunststoffcopolymerisatdispersion als weitere Hilfsmittel gegebenenfalls vorzugsweise noch folgende Komponenten:

| | |
|---|---|
| 0,1 bis 0,6 Gew.-% | Netz- bzw. Dispergiermittel für Füllstoff und Pigment, |
| 0,1 bis 1 Gew.-% | Verdickungsmittel, |

0,01 bis 2 Gew.-% Konservierungsmittel und
0,001 bis 0,5 Gew.-% Entschäumer,

jeweils bezogen auf das Gesamtgewicht der wäßrigen Zubereitungen.

Die erfindungsgemäßen wäßrigen Zubereitungen in Form von Dispersionsfarben, Anstrichmitteln und Kunststoff-Dispersions-Putzen unter Verwendung erfindungsgemäßer Kunststoffdispersionscopolymerisatlatices, die frei sind von Restmonomeren und anderen flüchtigen Bestandteilen, können unter Anwendung bekannter Techniken hergestellt werden, wie sie bei der Herstellung von üblichen Produkten dieser Art unter Verwendung von üblichen synthetischen Polymerlatices angewandt werden. Entscheidend ist dabei jedoch, daß bei der Auswahl der übrigen Ausgangsmaterialien ausdrücklich insbesondere auf deren Ammoniak-, Amin-, Ammonium-, Alkylammonium-, Lösungsmittel-, $H_2S$-, $SO_2$- und Formaldehydfreiheit sowie auf Freiheit von sonstigen flüchtigen organischen Substanzen geachtet worden ist.

Als Füllstoffe werden bevorzugt z. B. Calciumcarbonat, Magnesit, Dolomit, Kaolin, Glimmer, Talkum, Siliciumdioxid, Calciumsulfat, Feldspat, Bariumsulfat und Plastikperlen eingesetzt.

Als Weißpigmente werden z. B. Zinkoxid, Zinksulfid, basisches Bleicarbonat, Antimontrioxid, Lithopone (Zinksulfid + Bariumsulfat) und vorzugsweise Titandioxid verwendet.

Als anorganische Farbpigmente können vorzugsweise z. B. Eisenoxide, Ruß, Graphit, lumineszente Pigmente, Zinkgelb, Zinkgrün, Pariserblau, Ultramarin, Manganschwarz, Antimonschwarz, Manganviolett oder Schweinfurtergrün eingesetzt werden.

Als organische Farbpigmente sind bevorzugt z. B. Sepia, Gummigutt, Kasselerbraun, Toluidinrot, Pararot, Hansagelb, Indigo, Azofarbstoffe, anthrachinoide und indigoide Farbstoffe sowie Dioxazin-, Chinacridon-, Phthalocyanin-, Isoindolinon- und Metallkomplex-Pigmente der Azomethinreihe geeignet.

Die Füllstoffe können als Einzelkomponenten eingesetzt werden. In der Praxis haben sich Füllstoffmischungen besonders bewährt, wie z. B. Calciumcarbonat/Kaolin und Calciumcarbonat/Kaolin/Talkum. Zur Erhöhung der Deckkraft und zur Einsparung von Titandioxid werden häufig feinteilige Füllstoffe, wie z. B. feinteiliges Calciumcarbonat und Mischungen aus verschiedenen Calciumcarbonaten mit verschiedener Teilchengrößenverteilung eingesetzt.

Zur Einstellung der Deckkraft, des Farbtons und der Farbtiefe werden die Füllstoffe mit entsprechenden Mengen an Weißpigment und anorganischen und/oder organischen Farbpigmenten abgemischt.

Zur Dispergierung der Füllstoffe und Pigmente in Wasser können 0,1 bis 0,6 Gew.-%, bezogen auf das Gesamtgewicht der wäßrigen Zubereitung, Hilfsstoffe auf Basis anionischer oder nichtionischer Netzmittel zugegeben werden, wie vorzugsweise z. B. Natriumpyrophosphat, Natriumpolyphosphat, Naphthalinsulfonate, Natriumpolyacrylat, Natriumpolymaleinate und Polyphosphonate wie 1-hydroxyethan-1,1-diphosphonsaures Natrium und nitrilotris-(methylenphosphonsaures Natrium).

Verdickungsmittel, die verwendet werden können, sind unter anderem vorzugsweise Cellulosederivate wie Methylcellulose, Hydroxyethylcellulose und Carboxymethylcellulose. Ferner können Casein, Gummiarabicum, Tragantgummi, Stärke, Natriumalginat, Polyvinylalkohol, Polyvinylpyrrolidon, Natriumpolyacrylat und wasserlösliche Copolymerisate auf Acryl- und Methacrylsäurebasis, wie Acrylsäure/Acrylamid- und Methacrylsäure/Acrylester-copolymerisate, eingesetzt werden.

Auch anorganische Verdickungsmittel, wie z. B. Bentonite oder Hektorit, sind einsetzbar.

Solche Verdickungsmittel werden im allgemeinen in Mengen von 0,1 bis 3 Gew.-%, vorzugsweise 0,1 bis 1 Gew.-%, bezogen auf das Gesamtgewicht der wäßrigen Zubereitungen, eingesetzt.

Das Verdickungsmittel kann bereits während der Dispergierung der Füllstoffe und Pigmente in Wasser unter Zusatz eines Dispergiermittels und gegebenenfalls eines Entschäumers z. B. am Dissolver eingearbeitet werden; es kann jedoch auch, sofern es die Wasserbilanz des fertigen Bautenschutzmittels erlaubt, der fertigen Zubereitung zugegeben werden.

Die als Bindemittel verwendete erfindungsgemäße Kunststoffcopolymerisatdispersion kann bereits während der Pigment- und Füllstoffdispergierung anwesend sein, meist wird sie jedoch vorteilhafterweise der noch heißen oder auch abgekühlten Füllstoff/Pigment-Paste unter hochtourigem oder auch langsamerem Rühren zugesetzt. Unter Einhaltung einer Pigmentvolumenkonzentration von > 60 % werden pro 65 bis 95,9 Gew.-Teile Füllstoff + Pigment 4 bis 35 Gew.-Teile Kunststoffdispersioncopolymerisat eingesetzt.

Die Herstellung der Copolymerisatdispersionen für die erfindungsgemäßen schadstoffemissionsarmen wäßrigen Bautenschutzmittel-Zubereitungen erfolgt in bekannter Weise und bevorzugt durch Emulsionspolymerisation in Gegenwart eines radikalisch initiierenden Katalysators und mindestens eines Emulgators bei einem pH-Wert von 2 bis 6. Als Katalysatoren können die verschiedenen, bekannten, freie Radikale bildenden Katalysatoren oder auch Redoxsysteme verwendet werden. Der Konzentrationsbereich der Gesamtmenge von Emulgatoren liegt vorzugsweise zwischen 0,5 und 5 Gew.-%, bezogen auf die gesamte Monomerenmenge, wobei es sich um anionische, nichtionische oder gegebenenfalls kationische Emulgatoren handeln kann. Es können auch Latexstabilisatoren verwendet werden, wie z. B. wasserlösliche Polymere

aus der Gruppe Carboxymethylcellulose, Hydroxyethylcellulose, Polyvinylpyrrolidon, Poly-N-vinylacetamid, Polyvinylalkohol sowie Kombination von Emulgatoren und Latexstabilisatoren, ferner die bekannten stabilisierenden Comonomeren auf Mono- und Dicarbonsäurebasis und deren Halbester und Amide sowie Vinylsulfonsäure und deren Salze.

Als Monomere für die Herstellung der Kunststoffdispersion sind z. B. Vinlyester, insbesondere Vinylester von aliphatischen Monocarbonsäuren mit 1 bis 12 C-Atomen, geeignet, z. B. Vinylester niederer ($C_1$-$C_6$)-Carbonsäuren wie Vinylacetat, Vinylpropionat, Vinylbutyrat, Vinylcaproat, ferner Vinyllaurat, Vinyldecanat und Versaticsäurevinylester, außerdem z. B. olefinisch ungesättigte Verbindungen der Formel II,

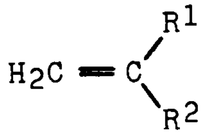 (II)

in der $R^1$ Wasserstoff, einen Alkylrest mit 1 bis 4 C-Atomen, einen Alkoxyrest mit 1 bis 4 C-Atomen, eine Nitrilgruppe, ein Halogenatom, vorzugsweise Chlor, oder einen Alkoxycarbonylrest mit 2 bis 12, vorzugsweise 2 bis 9, C-Atomen bedeutet und $R^2$ Wasserstoff, eine Methyl- oder eine Vinylgruppe darstellt.

Geeignete Monomere der Formel II sind beispielsweise insbesondere Olefine, z. B. Ethylen und Isobutylen, Vinylether, z. B. Vinylmethylether, Vinylethylether und Vinyl-n-butylether, ferner Acrylnitril, Methacrylnitril, Vinylchlorid, Acrylsäureester von einwertigen Alkoholen, z. B. Methylacrylat, Ethylacrylat, Butylacrylat und 2-Ethylhexylacrylat, sowie Methacrylsäureester von einwertigen Alkanolen, z. B. Methylmethacrylat, Ethylmethacrylat, Butylmethacrylat und 2-Ethylhexylmethacrylat. Ebenfalls geeignet sind Maleinsäurediester, insbesondere von einwertigen aliphatischen Alkoholen mit 2 bis 10, vorzugsweise 3 bis 8 C-Atomen, z. B. Dibutylmaleinat, Dihexylmaleinat und Dioctylmaleinat.

Die Monomeren bzw. Monomerenmischungen werden derart gewählt, daß Kunststoffdispersionen auf Homo-, Co- oder Terpolymerbasis mit einer MFT von ≦ 10 °C, vorzugsweise ≦ 5 °C, insbesondere ≦ 0 °C, entstehen. Dem Fachmann ist aufgrund der Tg der Polymeren und der Polymerisationsparameter bekannt, welche Monomeren oder Monomerenmischungen dafür eingesetzt werden müssen. Da die MFT unterhalb 0 °C nicht mehr meßbar ist, kann die untere Grenze der MFT nur durch die Tg angegeben werden. Die Tg sollte dabei -20 °C, vorzugsweise -10 °C, nicht unterschreiten. Geeignete Copolymerisate sind z. B. Vinylacetat/Ethylen im Verhältnis 86/14 bis 75/25, wie sie bei einem Ethylendruck im Bereich von 25 bis 60 bar hergestellt werden können. Ferner Vinylacetat/Vinylchlorid/Ethylen-Terpolymerisateim Verhältnis 58,8/25,2/16, hergestellt bei einem Ethylendruck von 40 bar mit einer MFT von 10 °C, oder 60,8/15,2/24 und 45,6/30,4/24, wie sie bei einem Ethylendruck von 50 bar und mit einer MFT von <0 °C und einer Tg von -0,5 bzw. +5.5 °C erhalten werden können. Bei Vinylacetat/Butylacrylat-Copolymerisatdispersionen erhält man den geeigneten MFT-Bereich durch Einsatz der Monomeren im Verhältnis 80/20 bis 50/50.

Die Hauptmonomeren werden mit kleinen Mengen, besonders bevorzugt mit 0,05 bis 0,3 Gew.-%, bezogen auf die Gesamtmonomerenmenge, olefinisch ungesättigter und hydrolysierbare Gruppen enthaltender Siliciumverbindungen der Formel I copolymerisiert, wobei in Formel I der Rest R vorzugsweise Vinyl-, Allyl, γ-Acryloxypropyl- und γ-Methacryloxypropyl- und $R^1$, $R^2$, $R^3$ vorzugsweise Alkoxy-mit 1 bis 8 C-Atomen oder Alkoxyalkoxy- mit 2 bis 10 C-Atomen, Acetoxy- oder Halogen, insbesondere Chlor, bedeutet.

Besonders bevorzugte Verbindungen der Formel I sind z. B. Vinyl-trimethoxysilan, Vinyltriethoxysilan, Vinyl-trimethylglykolsilan, Vinyl-triacetoxysilan, γ-Acryloxypropyl-trimethoxysilan, γ-Methacryloxypropyl-trimethoxysilan, γ-Methacryloxypropyl-tris(2-methoxyethoxy)-silan, Vinyltrichlorsilan, Vinylmethyldichlorsilan und Allyltrimethoxysilan.

Die Silane der Formel I können mit den Hauptmonomeren abgemischt oder getrennt bei der Emulsionscopolymerisation zugegeben werden. Sie können gleichmäßig mit den anderen Monomeren im Laufe der Polymerisation oder auch mit der ersten oder der zweiten Hälfte der Monomerenmenge zudosiert werden. Zur erfindungsgemäßen Verbesserung der Eigenschaften der Kunststoffdispersion sind nur relativ geringe Mengen der genannten Silane erforderlich, bevorzugt bis maximal 2 Gew.-%, bezogen auf die Gesamtmonomerenmenge, vorzugsweise 0,1 bis 0,4 Gew.-%, insbesondere 0,05 bis 0,2 Gew.-%.

Zur Entfernung von nicht umgesetzten Monomeren aus der Kunststoffdispersion können diese chemisch d. h. z. B. durch Auspolymerisation, beseitigt werden. Dafür werden freie Radikale bildende Katalysatoren verwendet. Zu diesen Katalysatoren gehören z. B. Peroxid- und Azoverbindungen, wie z. B. Azo-bis-(isobutyramidinhydrochlorid). Ebenfalls besonders geeignet sind kombinierte Typen von Katalysatoren, bei denen sowohl Reduktionsmittel als auch Oxidationsmittel verwendet werden. Bei der Verwendung dieses Typs von kombinierten Katalysatoren wird das Reduktionsmittel im allgemeinen als Aktivator und das

Oxidationsmittel als Initiator bezeichnet. Geeignete Aktivatoren sind z. B. Bisulfite, Sulfoxylate oder Verbindungen mit reduzierenden Eigenschaften, wie z. B. Ascorbinsäure und Fe-II-salze. Die Initiatoren sind dabei unter anderem z. B. Wasserstoffperoxid, Persulfate wie Natrium- und Kaliumpersulfat, Perborate und auch andere Per-Verbindungen. Spezielle Kombinationskatalysatoren oder Redoxsysteme, die zur Entfernung der Restmonomeren durch Polymerisation verwendet werden können, sind unter anderem z. B. Wasserstoffperoxid und Zinkformaldehydsulfoxylat, Wasserstoffperoxid und Natriummetabisulfit, Natriumpersulfat und Natriummetabisulfit, Wasserstoffperoxid und Natriumsulfit, Wasserstoffperoxid und Rongalit, Natrium- oder Kaliumpersulfat und Natriumsulfit, Natrium- oder Kaliumpersulfat und Rongalit, Wasserstoffperoxid und Ascorbinsäure, tert.-Butylhydroperoxid und Natriumsulfit, tert.-Butylhydroperoxid und Rongalit, Natriumpersulfat und Natriumthiosulfat. Metallsalze, in Spuren eingesetzt, wie z. B. 1 bis 100 ppm pro Monomeräquivalent an Eisen- oder Kupfersalzen, wie z. B. Mohr'sches Salz, können das Redoxsystem weiter aktivieren. Beispiele sind tert.-Butylhydroperoxid/Mohr'sches Salz/Rongalit oder Natriumpersulfat/Natriumsulfit/Natriumthiosulfat/Kupfersulfat.

Der Redoxkatalysator wird typischerweise in einer Menge zwischen ca. 0,1 und ca. 2 Gew.-%, vorzugsweise zwischen ca. 0,25 und ca. 0,75 Gew.-%, bezogen auf die Monomerenmenge, verwendet. Der Aktivator wird normalerweise in wäßriger Lösung zugegeben und die Aktivatormenge beträgt im allgemeinen das 0,25- bis 1-fache der Initiatormenge.

Zur Entfernung von restlichen Monomeren aus der Kunststoffdispersion können auch physikalische Methoden, wie z. B. Abdestillation, benutzt werden. Ferner können chemische und physikalische Methoden kombiniert werden. Die Abdestillation der restlichen Monomeren kann unter erhöhtem, vorzugsweise aber auch unter vermindertem Druck vorgenommen werden. Bei Abdestillation der restlichen Monomeren bei 760 Torr oder einem niedrigeren Druck kann zur Beschleunigung der Entmonomerisierung Wasserdampf oder ein Trägergas, wie z. B. Luft,Stickstoff oder Kohlendioxid, über die Oberfläche der Kunststoffdispersion geleitet werden. Vorteilhafterweise wird jedoch das Trägergas in der Entmonomerisierungsapparatur vom Boden her durch die Kunststoffdispersion geleitet. Das mit physikalischen Methoden aus der Kunststoffdispersion entfernte restliche Monomere wird zur Rückgewinnung in einem Kühler kondensiert. Bei Verwendung eines Trägergases bei der Entmonomerisierung werden im Kühler gegebenenfalls niedriger temperierte Kühlmittel als Wasser von 0 bis 30 °C, z. B. Kühlsole oder Aceton/Trockeneis, eingesetzt. Ferner können die restlichen Monomeren unter Vakuum und Rückgewinnung der Monomeren aus der Kunststoffdispersion durch den Einsatz von Drehschieberpumpen entfernt werden. Der Gehalt an restlichen Monomeren und anderen gegebenenfalls aus den Ausgangsstoffen stammenden flüchtigen organischen Substanzen oder bei der Polymerisation entstandenen flüchtigen organischen Bestandteilen und an dem Alkohol, der bei der Hydrolyse der copolymerisierten Siliciumverbindung der Formel I entsteht, in der erfindungsgemäß zu verwendenden Kunststoffcopolymerisatdispersion beträgt weniger als 0,1 Gew.-%, vorzugsweise 0,05 bis 0,001 Gew.-%, bezogen auf das Dispersionscopolymerisat.

Überraschenderweise führt bereits die Copolymerisation mit Spuren copolymerisierbarer Silane der Formel I bei Bindemitteln mit niedriger MFT zu Dispersionscopolymerisation mit so hoher Pigmentbindekraft, wie sie üblicherweise nur mit Dispersions(co)polymerisaten von hoher MFT, wie z. B. Styrol/Acrylat, unter Zusatz großer Lösungsmittelmengen zu der Kunststoffdispersion oder einer damit hergestellten Dispersionsfarbe erzielbar ist.

Neben Wassser, Füllstoff, Pigment, Dispergiermittel, Verdickungsmittel, Entschäumer und Konservierungsmittel werden für die erfindungsgemäßen geruchs- und schadstoffemissionsarmen wäßrigen Bautenschutzmittel-Zubereitungen bevorzugt Kunststoffcopolymerisatdispersionen auf Basis Vinylacetate/Ethylen und Vinylacetat/Vinylchlorid/Ethylen eingesetzt. Bei letzterer muß man den Ethylendruck zum Erreichen einer niedrigen MFT vergleichsweise zu Vinylacetat/Ethylen aufgrund der höheren Einfriertemperatur des Polyvinylchlorids höher wählen. Die dabei resultierenden Dispersionscopolymerisate bzw. deren wäßrige Dispersionen haben den Vorteil, daß Copolymerisatdispersionen zur Verfügung gestellt werden können, die die erfindungsgemäß erforderliche niedrige MFT besitzen.

Derartig hergestellte Kunststoffdispersionen besitzen aufgrund der niedrigen Siedepunkte der eingesetzten Monomeren außerdem große Vorteile gegenüber Styrol/Acrylat- und Styrol/Butadien-Copolymerisaten mit deren unangenehmen Begleitstoffen, die sich z. B. durch Diels-Alder-Reaktion bilden können.

Die Vinylacetat/Ethylen-Dispersionscopolymerisate sowie die entsprechenden Terpolymerisate mit Vinylchlorid können vorteilhaft durch Copolymerisation in Wasser mit Hilfe von anionischen, nichtionischen oder kationischen Emulgatoren als wäßrige Dispersionen hergestellt werden. Dabei können wasserlösliche, stabilisierende Polymere wie Carboxymethylcellulose, Hydroxyethylcellulose, Polyvinylpyrrolidon, Poly-N-vinylmethylacetamid und Polyvinylalkohol eingesetzt werden, ferner die bekannten stabilisierenden Comonomeren auf Mono- und Dicarbonsäurebasis sowie deren Halbester und Amide. Ferner können mit Vorteil bekannte Initiatorsysteme wie z. B. Persulfat, Natriumpersulfat/Sulfit sowie tert.-

Butylhydroperoxid/$Fe^{2+}$/Rongalit für die Polymerisation eingesetzt werden.

In Ermangelung entsprechender Autoklaven, wie sie zur Copolymerisation mit Ethylen und/oder Vinylchlorid üblicherweise benötigt werden, sind erfindungsgemäße Dispersionscopolymerisate mit der erforderlichen MFT auch durch Copolymerisation üblicher Monomerer mit solchen Monomeren erzielbar, die die MFT stark senken können, wie z. B. 2-Ethylhexylacrylat, Dioctylmaleinat, Versaticsäurevinylester oder Butadien. Es besteht jedoch bei den Co- und Terpolymeren auf Basis Vinylacetat/Ethylen und Vinylacetat/Vinylchlorid/Ethylen der ganz besondere Vorteil, daß diese sich aufgrund der niedrigen Siedepunkte ihrer Ausgangsmonomeren leicht von dem bei der Polymerisation nicht umgesetzten Restmonomerenanteil befreien lassen.

Bei der Auswahl entsprechender technischer Maßnahmen können außerdem die zurückgewonnenen Restmonomeren für weitere Polymerisationen eingesetzt werden.

Die genannten Dispersionscopolymerisate auf der Basis von Vinylacetate/Ethylen und Vinylacetat/Vinylchlorid/Ethylen mit Comonomeren der Formel I sind erfindungsgemäß besonders bevorzugt.

Durch die Kombination von Redox- und Stripprozeß bzw. durch den Stripprozeß allein zur Entfernung der Restmonomeren wird hier im Zusammenhang mit der Herstellung erfindungsgemäßer emissionsarmer Bautenschutzmittel und dem Einsatz von hydrolysierbaren und copolymerisierbaren Silanen der Formel I erstmals der Vorschlag zur Entfernung der aus der Hydrolyse von Silanen entstehenden, meist leichtflüchtigen Alkohole gemacht. Eine spezielle und bevorzugte Ausführungsform der Erfindung von unerwartet großer technischer Fortschrittlichkeit basiert auf folgender Arbeitsweise. Es werden Kunststoffcopolymerisatdispersionen hergestellt, die als Schutzkolloide z. B. Hydroxyethylcellulose oder Poly-N-vinylmethylacetamid enthalten und die neben diesen Schutzkolloiden vorzugsweise nichtionische Emulgatoren bzw. neben nichtionischen nur kleine Mengen an ionischen wie anionischen oder kationischen Emulgatoren enthalten. Vorteilhaft ist dabei zur weiteren Stabilisierung der Copolymerisatdispersion die Mitverwendung von ungesättigten hydrophilen und copolymerisationsfähigen Comonomeren, wie z. B. ungesättigten Mono- und Dicarbonsäuren bzw. deren Halbestern und Amiden sowie methacrylamido-2-methyl-2-propansulfonsaures-Naoder Na-vinylsulfonat. Man erhält dabei Kunststoffcopolymerisatdispersionen mit nicht sehr kleinen Teilchengrößen, wie z. B. $\leqq$ 0,1 µm, sondern mit durchschnittlichen Teilchengrößen von mindestens 0,1 µm, vorzugsweise $\geqq$ 0,15 µm, insbesondere $\geqq$ 0,2 µm. Diese zeichen sich durch hervorragende Gebrauchseigenschaften aus, wie z. B. dadurch, daß die Kunststoffdispersionen problemos mit trockenen Füllstoffen und Pigmenten mischbar sind und die aus ihnen hergestellten Bautenschutzmittel bei der üblichen Langzeitlagerung sehr beständig sind.

Es wurde von der Fachwelt bereits seit vielen Jahren ergebnislos versucht, diese von ihren gebrauchstechnischen Eigenschaften her so vorteilhaften Dispersionen wie diejenigen auf Basis von Vinylacetat/Ethylen und Vinylacetat/Vinylchlorid/Ethylen auch mit sehr hohem Pigmentbindevermögen herzustellen. Diese Aufgabe konnte nunmehr durch die vorliegende Erfindung unter Verwendung von Dispersionscopolymerisaten, die geringe Mengen an hydrolysierbare siliciumhaltige Reste tragenden bzw. $Si(OH)_x$-Gruppen (x = 1 bis 3) bildenden Comonomereinheiten aus Siliciumverbindungen der Formel I enthalten und deren wäßrige Dispersionen eine MFT von < 10 °C aufweisen, in unerwartet vorteilhafter Weise gelöst werden. Überraschenderweise unterbleibt bei Verwendung dieser Dispersionscopolymerisate als Bindemittel in den in Rede stehenden wäßrigen Bautenschutzmittelzubereitungen, trotz des Weglassens von Lösungsbzw. Filmkonsolidierungsmitteln, bei der Beurteilung der Wasch- und Scheuerbeständigkeit von Anstrichen nach DIN 53778 das sogenannte Ausbrechen des getrockneten Anstrichs bzw. der getrockneten Beschichtung bereits nach kurzer Trockenzeit der Zubereitung, d. h. der Anstrich bzw. die Beschichtung hat nicht, wie sonst häufig bei Farben aus Polymerdispersionen zu beobachten, nach kurzer Trockenzeit ungenügende mechanische Festigkeit.

Besonders geeignet und bevorzugt sind diejenigen erfindungsgemäßen wäßrigen Bautenschutzmittelzubereitungen, die als Bindemittel lösungsmittelfreie Kunststoffcopolymerisatdispersionen mit niedriger MFT enthalten und deren Copolymerisate insgesamt nur geringe Mengen an copolymerisationsfähigen und hydrolysierbare siliciumhaltige Reste tragenden bzw. $Si(OH)_x$-Gruppen (x = 1 bis 3) bildenden Monomereinheiten aus Siliciumverbindungen der Formel I, und zwar vorzugsweise 0,05 bis 2 Gew.-%, insbesondere 0,1 bis 0,4, besonders bevorzugt 0,05 bis 0,2 Gew.-%, bezogen auf das Copolymerisat, enthalten und die Copolymerisate durch Emulsionscopolymerisation aus Comonomerkombinationen, welche die erforderlichen niederen MFT-Werte ergeben, in Gegenwart von Hydroxyethylcellulose, nichtionischem Emulgator, geringen Mengen monomerem Vinylsulfonat unter Zusatz von insgesamt nur kleinen Mengen an Comonomeren der Formel I hergestellt wurden.

Um Dispersionsfarben und Dispersionsputze abzutönen, werden oftmals im Handel erhältliche Farbpasten eingesetzt. Diese Farbpasten enthalten aus Gründen der Stabilität bzw. ihrer Herstellbarkeit im

allgemeinen Lösungsmittel. Auch zur Überwindung der sich hieraus ergebenden Schwierigkeiten wird erfindungsgemäß ein neuer Weg beschritten. Aufgrund der hohen Stabilität der erfindungsgemäß eingesetzten Kunststoffcopolymerisatdispersion und ihrer Verträglichkeit mit trockenen Pigmenten erübrigt sich die Herstellung bzw. Verwendung lösungsmittelhaltiger Farbpasten, da das farbgebende Mittel gegebenenfalls in trockenem Zustand der Kunststoffdispersion bzw. der weißen Dispersionsfarbe bzw. dem Dispersionsputz zugemischt werden kann.

Der durch den Gehalt kleiner Mengen an Monomereinheiten aus Siliciumverbindungen der Formel I in Dispersionscopolymerisaten mit MFT-Werten ihrer wäßrigen Dispersionen von < 10 °C erzielbare Eigenschaftssprung bei den daraus hergestellten erfindungsgemäßen wäßrigen Bautenschutzmittelzubereitungen war für den Fachmann sehr überraschend, da er die Nutzung einer Reihe weiterer Vorteile in kombinierter Form ermöglichte, nämlich eine unproblematische Dispersionsherstellung, die große Stabilität der erfindungsgemäß zu verwendenden Kunststoffcopolymerisatdispersionen und deren unerwartet hohes Pigmentbindevermögen. Erst die Kombination dieser unerwartet vorteilhaften Eigenschaftsmerkmale hat die Herstellbarkeit der erfindungsgemäß lösungsmittel-, filmkonsolidierungsmittel- und weichmacher-freien Dispersionsfarben, Anstrichmittel und Kunststoffdispersionsputze überhaupt ermöglicht. Dazu kommt noch, daß bei der Herstellung der Kunststoffcopolymerisatdispersion auf den Einsatz von Ammonium- und Aminsalzen, wie z. B. $(NH_4)_2S_2O_8$, generell verzichtet wird und an deren Stelle die Alkalisalze, wie z. B. Natriumpersulfat, eingesetzt werden, damit in den alkalischen Anstrich- bzw. Bautenschutzmitteln für den Verbraucher und die Umwelt kein unangenehmer Ammoniak-und/oder Amingeruch entstehen kann. Desgleichen werden Amine, wie z. B. Di- und Triethyl- sowie Di- und Triethanolamine, als Bestandteile der wäßrigen Bautenschutzmittelzubereitungen vermieden. Aus demselben Grund werden als Pigmentdispergiermittel auch vornehmlich die Natriumsalze von anionischen Dispergiermitteln eingesetzt. Das gleiche gilt für die Emulgatoren bei der Polymerisation. Nicht $NH_4$- und/oder Alkylammoniumsalze von z. B. sulfatierten oxethylierten Alkoholen und Alkylphenolen, sondern die Na-Salze werden eingesetzt.

Bei der technischen Herstellung der Kunststoffcopolymerisatdispersionen und vor allem bei deren Entmonomerisierung sowie bei der Herstellung von Anstrichfarben und von Putzen kann eine Schaumbildung sehr lästig sein. Sie kann verhindert werden durch den Einsatz geringer Mengen, vorzugsweise 0,001 - 0,5 Gew.-%, bezogen auf die Dispersion, an Entschäumungsmitteln auf Basis natürlicher Fette und Öle, wie z. B. Spermöl und Tranölen, Paraffinöl, langkettigen Alkoholen wie Cetylalkohol, hochpolymeren Glykolen und Gemischen dieser Alkohole mit Fetten sowie Fettsäurepolyglykolester, Sorbitmonolaurat und Silikonen.

Beim Einsatz von Dispersionsfarben und Putzen ist es zwar am vorteilhaftesten, wenn sie gleich nach ihrer Herstellung verwendet werden. Erfahrungsgemäß lagern die fertiggestellten Gebinde aber oft mehr oder weniger lange Zeit beim Hersteller, beim Händler und/oder beim Verbraucher, bevor sie tatsächlich eingesetzt werden. Um Qualitätsminderung zu vermeiden, werden die Bautenschutzmittel vom Hersteller in den meisten Fällen konserviert. Zur Konservierung gegen einen späteren Befall durch Pilze oder Bakterien werden nach Möglichkeit keine oder nur sehr geringe Mengen an bioziden Zusatzstoffen verwendet. Andererseits kann durch Erhitzen des fertigen Mittels während 15 bis 120 Minuten auf Temperaturen von 60 - 120 °C eine Konservierung erreicht werden, wie z. B. durch Pasteurisieren oder Tyndallisieren (auch fraktionierte Sterilisation genannt), ferner durch Kühlen sowie durch Ausschluß von Luft bei der Lagerung in gasdichten Gebinden unter Inertgas. Auch Ultraschall, UV-Bestrahlung und Hochfrequenzfelder können zur Konservierung verwendet werden. Weiterhin sind Zusätze minimaler Mengen von Antibiotika, wie z. B. Terramycin, Streptomycin und Subtilin geeignet, ebenso Chinosol (äquimolare Verbindung aus o-Oxychinolinsulfat und Kaliumsulfat).

Als wirksame Mittel zur Konservierung können u. a. ferner in kleinsten Mengen eingesetzt werden: Chloracetamid, benzoesaures Natrium, Methyl-, Ethyl- und Propylester der p-Hydroxybenzoesäure und deren Natriumverbindungen, sorbinsaures Natrium, ameisensaures Natrium, Natriumborat sowie Borax, Wasserstoffperoxid, Milchsäure, Ameisensäure, Propionsäure, Nitrite und Nitrate, Salicylsäure, Dehydracetsäure, Thymol (Methylisopropylphenol), Bariummetaborat, Dithiocarbaminate, Chlormethylisothiazolinon und Benzisothiazolinon.

Die Erfindung wird durch die nachfolgenden Beispiele näher erläutert.

**Vergleichsbeispiel 1**

Herstellung einer nicht erfindungsgemäß verwendbaren Vinylacetat/Ethylen-Copolymerisatdispersion mit nachfolgender Restmonomereneliminierung

In eine Druckapparatur mit Rührer, Mantelheizung und Dosierpumpen wird eine wäßrige Lösung,

bestehend aus folgenden Bestandteilen, eingegeben:
10700 g Wasser, 142 g Natriumacetat x 3 $H_2O$, 1760 g einer 20 gew.-%igen wäßrigen Lösung von mit 30 Mol Ethylenoxid oxethyliertem Nonylphenol, 13700 g einer 5 gew.-%igen wäßrigen Hydroxyethylcelluloselösung (HEC-Lösung) (Viskosität der 2 gew.-%igen wäßrigen Lösung 300 mPa•s), 572 g einer 30 gew.-%igen wäßrigen Natriumvinylsulfonatlösung sowie 34,3 g einer 1 gew.-%igen wäßrigen Lösung von Fe-II-($SO_4$) x 7 $H_2O$. Der pH-Wert der Lösung beträgt 11,2. Die Apparatur wird von Luftsauerstoff befreit und es wird Ethylen in die Apparatur gedrückt. Bei 20 bar Ethylendruck werden 5900 g Vinylacetat und 10 % einer Reduktionsmittellösung aus 27,1 g Rongalit in 2 l Wasser eindosiert. Es wird auf 60 °C innentemperatur erhitzt und dabei der Ethylendruck auf 40 bar gesteigert. Nun werden 10 % Initiatorlösung aus 27,1 g tert.-Butylhydroperoxid in 2000 g Wasser zudosiert bei einer Innentemperatur von 60 °C und es wird zur Abführung der Reaktionswärme gekühlt. 24600 g Vinylacetat, die restlichen 90 % der Reduktionsmittellösung und die restlichen 90 % der Initiatorlösung werden anschließend zudosiert, wobei der Ethylendruck auf 40 bar gehalten wird. Danach wird eine Lösung aus 34,32 g Natriumpersulfat in 800 g Wasser zudosiert und die Innentemperatur auf 80 °C erhöht und 1 Stunde bei dieser Temperatur gehalten. Unter Rühren wird anschließend der Großteil des nicht umgesetzten Ethylens ausgegast und in einem Gasometer aufgefangen und es werden 2 l Wasser zugegeben. Dann werden unter Anlegen von Vakuum innerhalb von 2 Stunden 2,6 l Wasser abdestilliert, wodurch der Restvinylacetatgehalt der Dispersion auf 0,05 Gew.-%, bezogen auf die Dispersion, reduziert wird. Durch Wiederholung des Trennverfahrens wird ein Restvinylacetatgehalt von 0,012 Gew.-% erreicht.

| Charakterisierung der resultierenden Copolymerisatdispersion | |
|---|---|
| Feststoffgehalt (Gew.-%) | 55 |
| pH-Wert (Elektrodenmessung) | 4,8 |
| Viskosität (Pa•s) | 0,5 |
| Mindestfilmbildungstemperatur (MFT), °C | < 0 |
| Einfriertemperatur des Polymerisats (Tg), °C | 2 |

**Beispiele 1 bis 4**

Herstellung von erfindungsgemäß verwendbaren Vinylacetat/Ethylen/Vinyltrimethoxysilan-Copolymerisatdispersionen mit nachfolgender Eliminierung von Restmonomeren und sonstigen leichtflüchtigen Bestandteilen

Es wird in der Apparatur und nach der Methode des Vergleichsbeispiels 1 polymerisiert mit der Abänderung, daß in der Gesamtmenge von 30500 g Vinylacetat steigende Mengen Vinyltrimethoxysilan gelöst und die jeweils resultierenden homogenen Vinylacetatlösungen bei der Polymerisation der Beispiele 1 bis 4 eingesetzt werden. Im einzelnen werden somit folgende Mengen Vinyltrimethoxysilan dem Vinylacetat zugesetzt:

| | | | |
|---|---|---|---|
| In Vergleichsbeispiel 1: | 0 g | = 0 Gew.-%, | bez. auf das Copolymerisat |
| In Beispiel 1 | : 34,32 g | = 0,1 " | " |
| In Beispiel 2 | : 68,64 g | = 0,2 " | " |
| In Beispiel 3 | :171,6 g | = 0,5 " | " |
| In Beispiel 4 | :343,2 g | = 1,0 " | " |

Die Parameter der resultierenden Copolymerisatdispersionen, wie der Feststoffgehalt, der pH-Wert und die Viskosität der Dispersionen ändern sich in den Beispielen 1 bis 4, vergleichsweise zum Vergleichsbeispiel 1, praktisch nicht. Nur in Beispiel 4 sinkt der Feststoffgehalt der resultierenden Dispersion auf 52,7 Gew.-% und der mittlere Teilchendurchmesser steigt auf 0,9 μm an. Die wesentlichen Charakteristiken der erhaltenen Dispersionscopolymerisate bei steigender Menge an eingesetztem Silan sind der sich erniedrigende Schmelzindex, die Verminderung bzw. das Nichtauftreten von sogenanntem Ausreißen des Anstrichs und die Verbesserung der Naßscheuerbeständigkeit des Anstrichs auf Basis einer hochgefüllten Innenfarbe.

Das Ergebnis von Vergleichsversuchen zur Ermittlung der charakteristischen Parameter ist in der Tabelle 1 zusammengefaßt wiedergegeben.

| **Rahmenrezeptur der für vergleichende Prüfungen hergestellten hochgefüllten Dispersionsinnenfarben** | |
|---|---|
| | Gew.-Teile |
| Wasser | 3110 |
| Methylhydroxyethylcellulose (2 %ige wäßr. Lsg., Visk. 3000 mPa•s) | 60 |
| Na-Salz einer Polyacrylsäure vom MG 2000 (30 gew.-%ige wäßr. Lsg.) | 35 |
| Natriumpolyphosphat (10 gew.-%ige wäßr. Lösung) | 150 |
| Natronlauge (10 gew.-%ige Lösung) | 20 |
| Konservierungsmittel | 15 |
| Entschäumer | 20 |
| Talkum | 600 |
| Kaolin | 400 |
| Titandioxid | 700 |
| Calciumcarbonat (Teilchengröße: 90 Gew.-% < 2µm) | 2300 |
| Calciumcarbonat (Teilchengröße: 50 Gew.-% < 2µm) | 1500 |
| Kunststoffdispersion (55 gew.-%ig) | 1090 |
| Gesamtmenge Dispersionsfarbe: | 10000 |

**Herstellung von Dispersionsinnenfarben gemäß vorstehender Rahmenrezeptur**

Die pulverförmige Methylhydroxyethylcellulose wird in das Wasser eingestreut und unter Rühren gelöst, dann werden die Lösungen der Na-Salze von Polyacrylsäure und Polyphosphorsäure und die 10 gew.-%ige Natronlauge unter Rühren zugegeben. Der erhaltenen viskosen Lösung wird das Konservierungsmittel und der Entschäumer zugesetzt. Unter Rühren mittels eines Dissolvers werden zunächst bei einer Rührgeschwindigkeit von 2000 U/Min. Talkum und Kaolin eindispergiert und dann unter Steigerung der Rührgeschwindigkeit auf 5000 U/Min. Titandioxid und die Calciumcarbonattypen zugegeben. Es wird weiter 20 Min. bei 5000 U/Min. dispergiert, wobei die Temperatur der Pigment/Füllstoffpaste auf 60 °C ansteigt. Man läßt sie auf 30 °C abkühlen. Der pH-Wert beträgt 9,3.

Um die Parameter der beschriebenen Kunststoffcopolymerisatdispersionen zu untersuchen, werden jeweils 891 g der Pigment/Füllstoffpaste mit 109 g der jeweils zu prüfenden 55 gew.-%igen Kunststoffcopolymerisatdispersion verrührt (3 Min. Lenardrührer bei 1500 U/Min.). Nach einem Tag werden die so hergestellten Dispersionsfarben mit einem 300 µm-Rakel auf Lenetafolie aufgezogen, die Anstriche nach 5 Tagen Trocknen bei 23 °C und 50 % rel. Luftfeuchtigkeit mit dem Gardnergerät abgebürstet und die Anzahl der Doppelbürstenstriche (DBS) nach Gardner ermittelt, denen der Anstrich standhält. Dabei bedeuten zunehmende DBS-Zahlen zunehmende Anstrichqualität. Die Ergebnisse können der Tabelle 1 entnommen werden.

**TABELLE 1**

| Copolymerisatdispersion*) aus Beispiel Nr. | Gehalt des Copolymerisats an Vinyltrimethoxysilan Gew.-% | Schmelzindex des Copolymerisats $i_{21,6}$/120°C | Anzahl Doppelbürstenstriche (DBS) nach Gardner denen der Anstrich standhält | Ausreißen des Anstrichs | Wiederholung der Messungen nach Wärmebehandlung des Anstrichs (4 Std. 60°C) | |
|---|---|---|---|---|---|---|
| | | | | | DBS nach Gardner | Ausreißen des Anstrichs |
| 1 | 0,1 | 11,1 | 348 | mittel | 275 | etwas |
| 2 | 0,2 | 4,8 | 658 | nicht | 591 | nicht |
| 3 | 0,5 | 2,1 | 659 | nicht | 607 | nicht |
| 4 | 1 | 0,3 | 449 | nicht | 296 | nicht |
| Vergleichsbeispiel 1 | 0 | 18,4 | 217 | stark | 145 | stark |

*) Mit den Kunststoffcopolymerisatdispersionen der Beispiele 1 bis 4 werden erfindungsgemäße entmonomerisierte Copolymerisatdispersionen mit einem Restvinylacetatgehalt von 0,05 Gew.-%, bezogen auf das Copolymerisat, eingesetzt. Der Feststoffgehalt der Dispersionsfarben wird bestimmt nach DIN 53 189 und beträgt jeweils 62,75 Gew.-%. Die flüchtigen Bestandteile der Dispersionsfarben, fast ausschließlich aus Wasser bestehend, betragen entsprechend 37,25 Gew.-%. Bei den erfindungsgemäßen Dispersionsfarben enthalten die flüchtigen Bestandteile nach gaschromatographischer Bestimmung bei einer Übergangstemperatur bis zu 250°C außer Wasser nur 0,0017 Gew.-% flüchtige nichtwäßrige Stoffe.

Wie die Ergebnisse in Tabelle 1 zeigen, nimmt bei den emissionsarmen Innenfarben mit steigender Menge Vinyltrimethoxysilan bei steigendem Molekulargewicht des Copolymerisats (fallender Schmelzindex $i_{21,6}$ bei 120 °C entspricht einer steigenden Schmelzviskosität des Copolymeren, 21,6 = Gew. des Stempels in kg) das Pigmentbindevermögen zu, dabei vermindert sich das sogenannte Ausreißen.

**Beispiele 5 bis 8**

Beispiel 2 wird in den Beispielen 5 bis 8 wiederholt mit der Maßgabe, daß bei der Herstellung der Copolymerisatdispersion nach Beispiel 2 die durchschnittliche Teilchengröße des Dispersionscopolymerisats aus Vinylacetat und Ethylen unter Beibehaltung eines Vinyltrimethoxysilangehalts von 0,2 Gew.-% durch dem Fachmann bekannte Modifikation des Emulgator/Schutzkolloidsystems variiert wird. Dabei zeigt sich, daß mit abnehmender Teilchengröße das Pigmentbindevermögen der Dispersion ansteigt. Die MFT der Dispersionen liegt bei < 0 ° C. Nach der bei den Beispielen 1 bis 4 angegebenen Rahmenrezeptur für die Herstellung von hochgefüllten Dispersionsinnenfarben werden unter Einsatz der Dispersionen der Beispiele 5 bis 8 vergleichsweise Dispersionsinnenfarben hergestellt und an daraus hergestellten Anstrichen Doppelbürstenstrichprüfungen nach Gardner ausgeführt. Das Ergebnis dieser Prüfungen sowie Einzelheiten über Zusammensetzungen und Eigenschaften der Copolymerisatdispersionen der Beispiele 5 bis 8 sind der Tabelle 2 zu entnehmen.

**Vergleichsbeispiel 2**

Als Vergleich zu den Copolymerisatdispersionen der Beispiele 5 bis 8 wird eine handelsübliche Vinylacetat/Vinylchlorid/Ethylen-Terpolymer-Dispersion eingesetzt mit einer MFT von 12 ° C. Wie in den erfindungsgemäßen Beispielen wird auf die Zugabe von Lösungsmitteln zur Kunststoffdispersion bzw. zur Dispersionsfarbe verzichtet. Man erhält bei vergleichsweisem Einsatz dieser handelsüblichen Dispersion in einer vergleichenden Versuchsreihe mit Dispersionen der Beispiele 5 bis 8 schlechtere Ergebnisse als bei den erfindungsgemäßen Copolymerisatdispersionen mit niedriger MFT und geringen Gehalten an Silancomonomereinheiten. Das Ergebnis ist in Tabelle 2 aufgeführt.

**TABELLE 2**

| Beispiel Nr. | Variation des mittl. Teilchen-ø-s des Copolymerisats nach Beispiel 2 µm | Anstrichtest: Anzahl Doppelbürstenstriche (DBS) nach Gardner denen der Anstrich standhält | Anstrichtest: Ausreißen des Anstrichs | Wiederholung der Messungen nach Wärmebehandlung des Anstrichs (4 Std. 60°C): DBS nach Gardner | Wiederholung der Messungen nach Wärmebehandlung des Anstrichs (4 Std. 60°C): Ausreißen des Anstrichs |
|---|---|---|---|---|---|
| 5 | 0,359 | 570 | nicht | 531 | nicht |
| 6 | 0,264 | 1373 | nicht | 904 | nicht |
| 7 | 0,218 | 1266 | nicht | 946 | nicht |
| 8 | 0,176 | 1034 | nicht | 1210 | nicht |
| Vergl.-Bsp. 2 | 0,161 | 593 | mittel | 573 | mittel |

**Beispiel 9**

In einem 2 l Kolben mit Rührer, Innenthermometer und Stickstoffanschluß werden 556,7 g elektrolytfreies Wasser (E-Wasser), 40 g einer 20 gew.-%igen wäßrigen Lösung von oxethyliertem Nonylphenol (Oxethylierungsgrad 30), 8 g Natriumlaurylsulfat, 13,3 g 30 gew.-%iges Natriumvinylsulfonat und 3,3 g

kristallisiertes Natriumacetat vorgelegt und unter Rühren vermischt. Bei Raumtemperatur werden 10 % einer Monomerenmischung aus 558,9 g Vinylacetat, 239,5 g Butylacrylat und 1,6 g Vinyltrimethoxysilan zugegeben und die Mischung aufgeheizt. Bei 35 bis 45 ° C werden 1,6 g Natriumpersulfat, gelöst in 19,2 g Wasser, zugesetzt und die Mischung weiter auf 70 ° C Innentemperatur erhitzt. Innerhalb von 2 1/2 Stunden werden die restlichen 90 % der Monomerenmischung zudosiert. 10 Min. nach Beendigung des Zudosierens der Monomeren werden, 0,8 g Natriumpersulfat in 19,2 g Wasser zugegeben und die Dispersion 2 Stunden bei 85 ° C nachgeheizt. Während dieser Zeit wird an einer Destillationsbrücke restliches nicht umgesetztes Monomeres unter Durchleiten eines schwachen $N_2$-Stromes abdestilliert, wonach der Restmonomerengehalt 0,05 Gew.-%, bezogen auf das Dispersionscopolymerisat, beträgt. Die Dispersion wird gekühlt und über ein 160 $\mu$m-Sieb filtriert, wobei als Rückstand 0,28 g feuchtes Koagulat anfallen. Die Dispersion besitzt einen copolymeren Feststoffgehalt von 55,1 Gew.-%, einen mittleren Teilchendurchmesser von 137 nm und eine Filmbildetemperatur (Weißpunkt/Filmriß) von < 0/2 ° C.

Nach der in den Beispielen 1 bis 4 angegebenen Rahmenrezeptur für die Herstellung von hochgefüllten Dispersionsinnenfarben wurde aus 891 g Pigment/Füllstoffpaste und 109 g 55,1 gew.-% ige Kunststoffcopolymerisatdispersion aus Beispiel 9 eine Dispersionsfarbe hergestellt. Ein daraus hergestellter Anstrich ergibt nach 5-tägigem Trocknen bei 23 ° C bei der Scheuerfestigkeitsprüfung nach Gardner einen Wert von 500 DBS ohne Ausreißen.

Vergleichsbeispiel 3

Es wird wie in Beispiel 9 verfahren, jedoch mit der Abänderung, daß als Monomerenmischung ein Gemisch aus 560 g Vinylacetat und 240 g Butylacrylat eingesetzt wird. Die erhaltene Kunststoffcopolymerisatdispersion hat praktisch die gleiche MFT wie die nach Beispiel 9 hergestellte Copolymerisatdispersion. Die aus der hier erhaltenen nicht erfindungsgemäßen Kunststoffcopolymerisatdispersion vergleichsweise zu Beispiel 9 hergestellte hochgefüllte Dispersionsinnenfarbe ergibt einen Anstrich, der nach 5 Tagen Trocknung bei 23 ° C im Scheuerfestigkeitstest nach Gardner eine Wert von lediglich 300 DBS bei mittelstarkem Ausreißen ergibt. Dieses Ergebnis ist deutlich schlechter als das vergleichsweise in Beispiel 9 mit der erfindungsgemäß Silanoleinheiten enthaltenden Copolymerisatdispersion erhaltene Ergebnis.

**Patentansprüche**

**Patentansprüche für folgende Vertragsstaaten : AT, BE, CH, DE, FR, GB, IT, LI, LU, NL, SE**

**1.** Emissionsarme Dispersionsfarben, Anstrichmittel und Kunststoff-Dispersions-Putze in Form von wäßrigen Zubereitungen auf der Basis von wäßrigen Kunststoffdispersionspolymerisaten aus olefinisch ungesättigten Monomeren mit einer Pigmentvolumenkonzentration (PVK) von mindestens 60 %, enthaltend Wasser, Füllstoffe, Pigmente, Kunststoffdispersionspolymerisate und Hilfsmittel aus der Gruppe Netzmittel, Dispergiermittel, Emulgatoren, Schutzkolloide, Verdickungsmittel, Entschäumer, Farbstoffe und Konservierungsmittel, dadurch gekennzeichnet, daß der nichtflüchtige Anteil der wäßrigen Zubereitungen, bezogen auf den gesamten nichtflüchtigen Anteil,
35 bis 94 Gew.-% Füllstoff,
2 bis 30 Gew.-% Pigment,
0,1 bis 10 Gew.-% Hilfsmittel und
4 bis 35 Gew.-% Kunststoffdispersionscopolymerisat, dessen wäßrige Dispersion eine Mindestfilmbildungstemperatur (MFT) von < 10 ° C aufweist, enthält und das Kunststoffdispersionscopolymerisat einen Gehalt von 0,05 bis 2 Gew.-% an Monomereinheiten aus ungesättigten hydrolysierbaren organischen Siliciumverbindungen der Formel I,

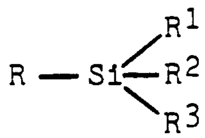

(I)

worin R ein in $\omega$-Stellung olefinisch ungesättigter organischer Rest und $R^1$, $R^2$, $R^3$, die gleich oder verschieden sein können, Halogen oder die Gruppe -OZ, wobei Z primäre oder sekundäre gegebenenfalls mit Alkoxygruppen substituierte Alkyl- oder Acylreste oder Wasserstoff bedeutet, besitzt und aus der wäßrigen Kunststoffdispersion nach ihrer Herstellung alle flüchtigen nichtwäßrigen Komponenten

einschließlich der nicht umgesetzten Restmonomeren durch Destillation entfernt worden sind, der Gehalt der wäßrigen Zubereitungen an flüchtigen nichtwäßrigen Bestandteilen < 0,1 Gew.-%, bezogen auf den gesamten nichtflüchtigen Anteil, beträgt und der pH-Wert der wäßrigen Zubereitungen im Bereich von 5,5 bis 10 liegt.

**2.** Ausführungsform nach Anspruch 1, dadurch gekennzeichnet, daß das Kunststoffdispersionscopolymerisat Monomereinheiten aus der Gruppe Vinylester, Vinylester/Ethylen, Vinylester/Vinylchlorid/Ethylen, Vinylester/Versaticsäurevinylester, Vinylester/Acrylester, Acrylester/Versaticsäurevinylester/Ethylen enthält.

**3.** Ausführungsform nach Anspruch 1 und/oder 2, dadurch gekennzeichnet, daß das Kunststoffdispersionscopolymerisat als hydrolysierbare Monomereinheiten der Formel I Verbindungen aus der Gruppe $\gamma$-Acryloxypropyl-trimethoxysilan, $\gamma$-Methacryloxypropyl-trimethoxysilan, Vinyl-trimethoxysilan, Vinyl-triethoxysilan, vinyl-trimethylglykolsilan, Vinyl-triacetoxysilan, Vinyltrichlorsilan, Vinylmethyldichlorsilan und $\gamma$-Methacryloxypropyltris-(2-methoxyethoxy)-silan enthält.

**4.** Ausführungsform nach einem oder mehreren der Ansprüche 1 bis 3, dadurch gekennzeichnet, daß das Kunststoffdispersionscopolymerisat aus Gemischen von Dispersionscopolymerisaten besteht, von denen ein Teil keine Monomereinheiten der Formel I enthält und ein anderer Teil Monomereinheiten der Formel I in einer solchen Menge enthält, daß der durchschnittliche Gehalt an Monomereinheiten der Formel I in dem gesamten Dispersionscopolymerisatgemisch 0,05, bis 2 Gew.-%, bezogen auf das gesamte Kunststoffdispersionscopolymerisatgemisch, beträgt.

**5.** Ausführungsform nach einem oder mehreren der Ansprüche 1 bis 4, dadurch gekennzeichnet, daß der mittlere Teilchendurchmesser der Kunststoffdispersionscopolymerisatpartikel mindestens bei 0,1 $\mu$m oder darüber liegt.

**6.** Ausführungsform nach einem oder mehreren der Ansprüche 1 bis 5, dadurch gekennzeichnet, daß die wäßrigen Zubereitungen frei sind von Restmonomeren, von niederen Alkoholen sowie von Ammoniak und/oder flüchtige Amine oder gegebenenfalls $H_2S$ oder Merkaptane abspaltenden Komponenten und der Gehalt der wäßrigen Zubereitungen an flüchtigen nichtwäßrigen Bestandteilen insgesamt < 0,05 Gew.-%, bezogen auf den gesamten nichtflüchtigen Anteil, beträgt.

**7.** Ausführungsform nach einem oder mehreren der Ansprüche 1 bis 6, dadurch gekennzeichnet, daß das in den wäßrigen Zubereitungen enthaltene und Siliciumreste aus Monomereinheiten der Formel I tragende Kunststoffdispersionscopolymerisat durch radikalisch initiierte Copolymerisation der fein verteilten Monomeren mit einem Anteil von 0,05 bis 2 Gew.-%, bezogen auf die Gesamtmonomerenmenge, an Monomeren der Formel I in wäßrigem Medium, unter Mitverwendung von Hydroxyethylcellulose, nichtionischen Emulgatoren und monomerem Natriumvinylsulfonat als Emulgator/Schutzkolloidsystem hergestellt wurde und die durch Hydrolyse aus den Monomereinheiten der Formel I in der wäßrigen dispersion gegebenenfalls entstandenen flüchtigen Alkoholkomponenten sowie gegebenenfalls vorhandene flüchtige Restmonomeranteile nach beendeter Polymerisationsreaktion durch Destillation unter vermindertem Druck entfernt worden sind.

**8.** Verwendung der wäßrigen Zubereitungen nach einem oder mehreren der Ansprüche 1 bis 7 als Bautenschutzmittel und/oder als Baustoffe.

**Patentansprüche für folgenden Vertragsstaat : ES**

**1.** Verfahren zur Herstellung von emissionsarmen Dispersionsfarben, Anstrichmitteln und Kunststoff-Dispersions-Putzen in Form von wäßrigen Zubereitungen auf der Basis von wäßrigen Kunststoffdispersionspolymerisaten aus olefinisch ungesättigten Monomeren mit einer Pigmentvolumenkonzentration (PVK) von mindestens 60 %, enthaltend Wasser, Füllstoffe, Pigmente, Kunststoffdispersionspolymerisate und Hilfsmittel aus der Gruppe Netzmittel, Dispergiermittel, Emulgatoren, Schutzkolloide, Verdikkungsmittel, Entschäumer, Farbstoffe und Konservierungsmittel, durch intensives Vermischen der Bestandteile, dadurch gekennzeichnet, daß der nichtflüchtige Anteil der resultierenden wäßrigen Zubereitungen, bezogen auf den gesamten nichtflüchtigen Anteil,
35 bis 94 Gew.-% Füllstoff,

2 bis 30 Gew.-% Pigment,
0,1 bis 10 Gew.-% Hilfsmittel und
4 bis 35 Gew.-% Kunststoffdispersionscopolymerisat, dessen wäßrige Dispersion eine Mindestfilmbildungstemperatur (MFT) von < 10 °C aufweist, enthält und das Kunststoffdispersionscopolymerisat einen Gehalt von 0,05 bis 2 Gew.-% an Monomereinheiten aus ungesättigten hydrolysierbaren organischen Siliciumverbindungen der Formel I,

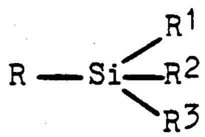

(I)

worin R ein in ω-Stellung olefinisch ungesättigter organischer Rest und $R^1$, $R^2$, $R^3$, die gleich oder verschieden sein können, Halogen oder die Gruppe -OZ, wobei Z primäre oder sekundäre gegebenenfalls mit Alkoxygruppen substituierte Alkyl- oder Acylreste oder Wasserstoff bedeutet, besitzt und aus der wäßrigen Kunststoffdispersion nach ihrer Herstellung alle flüchtigen nichtwäßrigen Komponenten einschließlich der nicht umgesetzten Restmonomeren durch Destillation entfernt worden sind, der Gehalt der wäßrigen Zubereitungen an flüchtigen nichtwäßrigen Bestandteilen < 0,1 Gew.-%, bezogen auf den gesamten nichtflüchtigen Anteil, beträgt und der pH-Wert der wäßrigen Zubereitungen im Bereich von 5,5 bis 10 liegt.

**2.** Verfahren nach Anspruch 1, dadurch gekennzeichnet, daß das Kunststoffdispersionscopolymerisat Monomereinheiten aus der Gruppe Vinylester, Vinlester/Ethylen, Vinylester/Vinylchlorid/Ethylen, Vinylester/Versaticsäurevinylester, Vinylester/Acrylester, Acrylester/Versaticsäurevinylester/Ethylen enthält.

**3.** Verfahren nach Anspruch 1 und/oder 2, dadurch gekennzeichnet, daß das Kunststoffdispersionscopolymerisat als hydrolysierbare Monomereinheiten der Formel I Verbindungen aus der Gruppe γ-Acryloxypropyl-trimethoxysilan, γ-Methacryloxypropyl-trimethoxysilan, Vinyl-trimethoxysilan, Vinyl-triethoxysilan, Vinyl-trimethylglykolsilan, Vinyl-triacetoxysilan, Vinyltrichlorsilan, Vinylmethyldichlorsilan und γ-Methacryloxypropyltris-(2-methoxyethoxy)-silan enthält.

**4.** Verfahren nach einem oder mehreren der Ansprüche 1 bis 3, dadurch gekennzeichnet, daß das Kunststoffdispersionscopolymerisat aus Gemischen von Dispersionscopolymerisaten besteht, von denen ein Teil keine Monomereinheiten der Formel I enthält und ein anderer Teil Monomereinheiten der Formel I in einer solchen Menge enthält, daß der durchschnittliche Gehalt an Monomereinheiten der Formel I in dem gesamten Dispersionscopolymerisatgemisch 0,05 bis 2 Gew.-%, bezogen auf das gesamte Kunststoffdispersionscopolymerisatgemisch, beträgt.

**5.** Verfahren nach einem oder mehreren der Ansprüche 1 bis 4, dadurch gekennzeichnet, daß der mittlere Teilchendurchmesser der Kunststoffdispersionscopolymerisatpartikel mindestens bei 0,1 µm oder darüber liegt.

**6.** Verfahren nach einem oder mehreren der Ansprüche 1 bis 5, dadurch gekennzeichnet, daß die wäßrigen Zubereitungen frei sind von Restmonomeren, von niederen Alkoholen sowie von Ammoniak und/oder flüchtige Amine oder gegebenenfalls $H_2S$ oder Merkaptane abspaltenden Komponenten und der Gehalt der wäßrigen Zubereitungen an flüchtigen nichtwäßrigen Bestandteilen insgesamt < 0,05 Gew.-%, bezogen auf den gesamten nichtflüchtigen Anteil, beträgt.

**7.** Verfahren nach einem oder mehreren der Ansprüche 1 bis 6, dadurch gekennzeichnet, daß das zur Herstellung der wäßrigen Zubereitungen eingesetzte und Siliciumreste aus Monomereinheiten der Formel I tragende Kunststoffdispersionscopolymerisat durch radikalisch initiierte Copolymerisation der fein verteilten Monomeren mit einem Anteil von 0,05 bis 2 Gew.-%, bezogen auf die Gesamtmonomerenmenge, an Monomeren der Formel I in wäßrigem Medium, unter Mitverwendung von Hydroxyethylcellulose, nichtionischen Emulgatoren und monomerem Natriumvinylsulfonat als Emulgator/Schutzkolloidsystem hergestellt wurde und die durch Hydrolyse aus den Monomereinheiten

der Formel I in der wäßrigen Dispersion gegebenenfalls entstandenen flüchtigen Alkoholkomponenten sowie gegebenenfalls vorhandene flüchtige Restmonomeranteile nach beendeter Polymerisationsreaktion durch Destillation unter vermindertem Druck entfernt worden sind.

**8.** Verwendung der wäßrigen Zubereitungen, hergestellt nach einem oder mehreren der Ansprüche 1 bis 7, als Bautenschutzmittel und/oder als Baustoffe.

## Claims

### Claims for the following Contracting States : AT, BE, CH, DE, FR, GB, IT, LI, LU, NL, SE

**1.** Low-emission dispersion paints, coating materials and synthetic resin dispersion plasters in the form of aqueous preparations based on aqueous synthetic resin dispersion polymers obtained from olefinically unsaturated monomers having a pigment volume concentration (PVC) of at least 60 % and containing water, fillers, pigments, synthetic resin dispersion polymers and auxiliaries selected from the group of wetting agents, dispersants, emulsifiers, protective colloids, thickeners, antifoams, dyes and preservatives, wherein the non-volatile part of the resulting aqueous preparations contains
35 to 94 % by weight of a filler,
2 to 30 % by weight of a pigment,
0,1 to 10 % by weight of an auxiliary and
4 to 35 % by weight of synthetic resin dispersion copolymer, based on the total non-volatile part, the aqueous dispersion of which copolymer possesses a minimum film-forming temperature (MFT) of < 10 ° C, and the synthetic resin dispersion copolymer has a content of 0.05 to 2 % by weight of monomeric units derived from unsaturated hydrolyzable organic silicon compounds of the formula I,

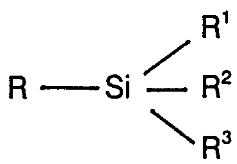

(I)

in which R denotes an organic radical olefinically unsaturated in the ω -position and $R^1$, $R^2$ and $R^3$ which may be identical or different, denote halogen or the group -OZ, Z denoting primary or secondary alkyl radicals or acyl radicals optionally substituted by alkoxy groups, or hydrogen, and all volatile non-aqueous components including the non-reacted residual monomers have been removed by distillation from the aqueous synthetic resin dispersion following its preparation, and the content of volatile non-aqueous constituents of the aqueous preparations is < 0.1 % by weight, based on the total non-volatile part, and the pH of the aqueous preparations is in the range from 5.5 to 10.

**2.** An embodiment as claimed in claim 1, wherein the synthetic resin dispersion copolymer contains monomeric units selected from the group of vinyl esters, vinyl esters/ethylene, vinyl esters/vinyl chloride/ethylene, vinyl esters/vinyl versatates, vinyl esters/acrylic esters and acrylic esters/vinyl versatates/ethylene.

**3.** An embodiment as claimed in claim 1 and/or 2, wherein the synthetic resin dispersion copolymer contains compounds selected from the group of γ-acryloxypropyltrimethoxysilane, γ-methacryloxypropyltrimethoxysilane, vinyltrimethoxysilane, vinyltriethoxysilane, vinyltrimethylglycolsilane, vinyltriacetoxysilane, vinyltrichlorosilane, vinylmethyldichlorosilane and γ-methacryloxypropyltris(2-methoxyethoxy)silane as hydrolyzable monomeric units of the formula I.

**4.** An embodiment as claimed in one or more of claims 1 to 3, wherein the synthetic resin dispersion copolymer comprises mixtures of dispersion copolymers, a part of which contains no monomeric units of the formula I and another part of which contains monomeric units of the formula I in such an amount that the mean content of monomeric units of the formula I in the total dispersion copolymer mixture is 0.05 to 2 % by weight, based on the total synthetic resin dispersion copolymer mixture.

**5.** An embodiment as claimed in one or more of claims 1 to 4, wherein the mean particle diameter of the

synthetic resin dispersion copolymer particles is at least in the neighborhood of 0.1 µm or higher.

6. An embodiment as claimed in one or more of claims 1 to 5, wherein the aqueous preparations are free from residual monomers, from low alcohols and from components which may give rise by cleavage to ammonia and/or volatile amines or $H_2S$ or mercaptans, and the total content of volatile non-aqueous constituents of the aqueous preparations is < 0.05 % by weight, based on the total non-volatile part.

7. An embodiment as claimed in one or more of claims 1 to 6, wherein the synthetic resin dispersion copolymer contained in the aqueous preparations and carrying silicon radicals from monomeric units of the formula I was prepared by free-radically initiated copolymerization of the finely divided monomers having an amount of 0.05 to 2 % by weight, based on the total amount of monomer, of monomers of the formula I in aqueous medium with the simultaneous use of hydroxyethylcellulose, non-ionic emulsifieres and monomeric sodium vinyl sulfonate as emulsifier/protecive colloid system, and the volatile alcohol components which may have formed by hydrolysis from the monomeric units of the formula I in the aqueous dispersion and any volatile amounts of residual monomers which may be present after the terminated polymerization reaction have been removed by distillation under reduced pressure.

8. The use of the aqueous preparations as claimed in one or more of claims 1 to 7 as construction protective materials and/or as structural materials.

**Claims for the following Contracting State : ES**

1. A process for preparing low-emission dispersion paints, coating materials and synthetic resin dispersion plasters in the form of aqueous preparations based on aqueous synthetic resin dispersion polymers obtained from olefinically unsaturated monomers having a pigment volume concentration (PVC) of at least 60 % and containing water, fillers, pigments, synthetic resin dispersion polymers and auxiliaries selected from the group of wetting agents, dispersants, emulsifiers, protective colloids, thickeners, antifoams, dyes and preservatives, wherein the non-volatile part of the resulting aqueous preparations contains
35 to 94 % by weight of a filler,
2 to 30 % by weight of a pigment,
0,1 to 10 % by weight of an auxiliary and
4 to 35 % by weight of synthetic resin dispersion copolymer, based on the total non-volatile part, the aqueous dispersion of which copolymer possesses a minimum film-forming temperature (MFT) of < 10 ° C, and the synthetic resin dispersion copolymer has a content of 0.05 to 2 % by weight of monomeric units derived from unsaturated hydrolyzable organic silicon compounds of the formula I,

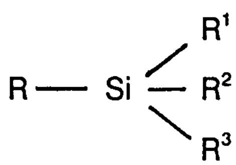

(I)

in which R denotes an organic radical olefinically unsaturated in the ω-position and $R^1$, $R^2$ and $R^3$ which may be identical or different, denote halogen or the group -OZ, Z denoting primary or secondary alkyl radicals or acyl radicals optionally substituted by alkoxy groups, or hydrogen, and all volatile non-aqueous components including the non-reacted residual monomers have been removed by distillation from the aqueous synthetic resin dispersion following its preparation, and the content of volatile non-aqueous constituents of the aqueous preparations is < 0.1 % by weight, based on the total non-volatile part, and the pH of the aqueous preparations is in the range from 5.5 to 10.

2. A process as claimed in claim 1, wherein the synthetic resin dispersion copolymer contains monomeric units selected from the group of vinyl esters, vinyl esters/ethylene, vinyl esters/vinyl chloride/ethylene, vinyl esters/vinyl versatates, vinyl esters/acrylic esters and acrylic esters/vinyl versatates/ethylene.

3. A process as claimed in claim 1 and/or 2, wherein the synthetic resin dispersion copolymer contains compounds selected from the group of γ-acryloxypropyltrimethoxysilane, γ-methacryloxypropyltrimethoxysilane, vinyltrimethoxysilane, vinyltriethoxysilane, vinyltrimethylglycolsilane, vinyltriacetoxysilane, vinyltrichlorosilane, vinylmethyldichlorosilane and γ-methacryloxypropyltris(2-methoxyethoxy)-silane as hydrolyzable monomeric units of the formula I.

4. A process as claimed in one or more of claims 1 to 3, wherein the synthetic resin dispersion copolymer comprises mixtures of dispersion copolymers, a part of which contains no monomeric units of the formula I and another part of which contains monomeric units of the formula I in such an amount that the mean content of monomeric units of the formula I in the total dispersion copolymer mixture is 0.05 to 2 % by weight, based on the total synthetic resin dispersion copolymer mixture.

5. A process as claimed in one or more of claims 1 to 4, wherein the mean particle diameter of the synthetic resin dispersion copolymer particles is at least in the neighborhood of 0.1 µm or higher.

6. A process as claimed in one or more of claims 1 to 5, wherein the aqueous preparations are free from residual monomers, from low alcohols and from components which may give rise by cleavage to ammonia and/or volatile amines or $H_2S$ or mercaptans, and the total content of volatile non-aqueous constituents of the aqueous preparations is $< 0.05$ % by weight, based on the total non-volatile part.

7. A process as claimed in one or more of claims 1 to 6, wherein the synthetic resin dispersion copolymer contained in the aqueous preparations and carrying silicon radicals from monomeric units of the formula I was prepared by free-radically initiated copolymerization of the finely divided monomers having an amount of 0.05 to 2 % by weight, based on the total amount of monomer, of monomers of the formula I in aqueous medium with the simultaneous use of hydroxyethylcellulose, non-ionic emulsifieres and monomeric sodium vinylsulfonate as emulsifier/protecive colloid system, and the volatile alcohol components which may have formed by hydrolysis from the monomeric units of the formula I in the aqueous dispersion and any volatile amounts of residual monomers which may be present after the terminated polymerization reaction have been removed by distillation under reduced pressure.

8. The use of the aqueous preparations as claimed in one or more of claims 1 to 7 as construction protective materials and/or as structural materials.

**Revendications**

**Revendications pour les Etats contractants suivants : AT, BE, CH, DE, FR, GB, IT, LI, LU, NL, SE**

1. Peintures dispersions, produits de revêtements et enduits à base de dispersions de résines, à faibles émissions, sous forme de préparations aqueuses à base de polymères en dispersion de résines, constitués de monomères à insaturation oléfinique ayant une concentration pigmentaire volumique (CPV) d'au moins 60 %, contenant de l'eau, des charges, des pigments, des polymères en dispersion de résines et des adjuvants appartenant à l'ensemble comprenant les mouillants, les dispersants, les émulsifiants, les colloïdes protecteurs, les épaississants, les anti-moussants, les colorants et les conservateurs, caractérisés en ce que la partie non volatile des préparations aqueuses contient, par rapport à la totalité de la partie non volatile,
35 à 94 % en poids de charge,
2 à 30 % en poids de pigment,
0,1 à 10 % en poids d'adjuvant et
4 à 35 % en poids d'un copolymère en dispersion de résines, dont la dispersion aqueuse a un point blanc, ou température minimale de formation du feuil, inférieur à 10 ° C, et
en ce que le copolymère en dispersion de résines a une teneur de 0,05 à 2 % en poids, par rapport au copolymère en dispersion de résines, de motifs monomères constitués de composés organiques du silicium hydrolysables et insaturés de formule I :

$$R - Si(R^1)(R^2)(R^3) \qquad (I)$$

dans laquelle R est un radical organique à insaturation oléfinique en position ω, et $R^1$, $R^2$, $R^3$, qui peuvent être identiques ou différents, représentent chacun un halogène, ou le groupe -OZ, où Z représente un radical alkyle ou acyle primaire ou secondaire, éventuellement substitué par des groupes alcoxy, ou un hydrogène,
et en ce que l'on a éliminé, par distillation, à partir de la dispersion aqueuse de résines, après sa préparation, tous les composants volatils non-aqueux, parmi lesquels les monomères résiduels n'ayant pas réagi ; en ce que la teneur des préparations aqueuses en constituants volatils non-aqueux est inférieure à 0,1 % en poids par rapport à la quantité totale de substances non-volatiles, et en ce que le pH des préparations aqueuses est compris entre 5,5 et 10.

**2.** Forme de réalisation selon la revendication 1, caractérisée en ce que le copolymère en dispersion de résines contient des motifs monomères appartenant à l'ensemble des motifs ester vinylique, ester vinylique/éthylène, ester vinylique/chlorure de vinyle/éthylène, ester vinylique/esters vinyliques des acides versatiques, ester vinylique/ester acrylique, ester acrylique/esters vinyliques des acides versatiques/éthylène.

**3.** Forme de réalisation selon les revendications 1 et/ou 2, caractérisée en ce que le copolymère en dispersion de résines contient en tant que motifs monomères hydrolysables de formule I des composés choisis parmi l'ensemble comprenant les composés suivants : γ-acryloxypropyl-triméthoxysilane, γ-méthacryloxypropyl-triméthoxysilane, vinyl-triméthoxysilane, vinyl-triéthoxysilane, vinyl-triméthylglycolsilane, vinyl-triacétoxysilane, vinyltrichlorosilane, vinylméthyldichlorosilane et γ-méthacryloxypropyltris-(méthoxy-2-éthoxy)-silane.

**4.** Forme de réalisation selon l'une ou plusieurs des revendications 1 à 3, caractérisée en ce que le copolymère en dispersion de résines est constitué de mélanges de copolymères en dispersion, dont une partie ne contient pas de motifs monomères de formule I et une autre partie contient des motifs monomères de formule I en une quantité telle que la teneur moyenne de la totalité du mélange de copolymères en dispersion en motifs monomères de formule I est de 0,05 à 2 % en poids par rapport à la totalité du mélange de copolymères en dispersion de résines.

**5.** Forme de réalisation selon l'une ou plusieurs des revendications 1 à 4, caractérisée en ce que la granulométrie moyenne des particules de copolymères en dispersion de résines est d'au moins 0,1 µm ou plus.

**6.** Forme de réalisation selon l'une ou plusieurs des revendications 1 à 5, caractérisée en ce que les préparations aqueuses sont exemptes de monomères résiduels, d'alcools inférieurs, ainsi que d'ammoniac et/ou d'amines volatiles ou de composants qui éliminent éventuellement du $H_2S$ ou des mercaptans, et que la teneur des préparations aqueuses en constituants volatils non-aqueux est en tout inférieure à 0,05 % en poids par rapport à la totalité des composants non-volatils.

**7.** Forme de réalisation selon l'une ou plusieurs des revendications 1 à 6, caractérisée en ce que le copolymère en dispersion de résines contenu dans les préparations aqueuses et portant des résidus siliciés provenant de motifs monomères de formule I, a été préparé par copolymérisation, amorcée par des amorceurs radicalaires, des monomères finement divisés avec de 0,05 à 2 % en poids, par rapport à la quantité totale des monomères, de monomères de formule I en milieu aqueux, avec utilisation simultanée d'hydroxyéthylcellulose, d'émulsifiants non-ioniques et de vinylsulfonate de sodium monomère servant de système émulsifiant/colloïde protecteur, et en ce que les composants alcools volatils éventuellement formés par hydrolyse à partir des motifs monomères de formule I dans la dispersion aqueuse, ainsi que les fractions monomères résiduelles volatiles éventuellement présentes ont été, après la fin de la réaction de polymérisation, éliminés par distillation sous pression réduite.

**8.** Utilisation des préparations aqueuses selon l'une ou plusieurs des revendications 1 à 7, en tant que produits pour la protection des ouvrages de construction et/ou en tant que matériaux de construction.

**Revendications pour l'Etat contractant suivant : ES**

**1.** Procédé pour préparer des peintures dispersions, produits de revêtements et enduits à base de dispersions de résines, à faibles émissions, sous forme de préparations aqueuses à base de polymères en dispersion de résines, constitués de monomères à insaturation oléfinique ayant une concentration pigmentaire volumique (CPV) d'au moins 60 %, contenant de l'eau, des charges, des pigments, des polymères en dispersion de résines et des adjuvants appartenant à l'ensemble comprenant les mouillants, les dispersants, les émulsifiants, les colloïdes protecteurs, les épaississants, les anti-moussants, les colorants et les conservateurs, par mélange intense des constituants, caractérisé en ce que la partie non volatile des préparations aqueuses contient, par rapport à la totalité de la partie non volatile,
35 à 94 % en poids de charge,
2 à 30 % en poids de pigment,
0,1 à 10 % en poids d'adjuvant et
4 à 35 % en poids d'un copolymère en dispersion de résines, dont la dispersion aqueuse a un point blanc, ou température minimale de formation du feuil, inférieur à 10 ° C, et
en ce que le copolymère en dispersion de résines a une teneur de 0,05 à 2 % en poids, par rapport au copolymère en dispersion de résines, de motifs monomères constitués de composés organiques du silicium hydrolysables et insaturés de formule I :

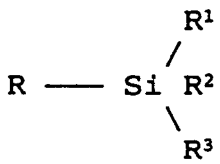

(I)

dans laquelle R est un radical organique à insaturation oléfinique en position ω, et $R^1$, $R^2$, $R^3$, qui peuvent être identiques ou différents, représentent chacun un halogène, ou le groupe -OZ, où Z représente un radical alkyle ou acyle primaire ou secondaire, éventuellement substitué par des groupes alcoxy, ou un hydrogène,
et en ce que l'on a éliminé, par distillation, à partir de la dispersion aqueuse de résines, après sa préparation, tous les composants volatils non-aqueux, parmi lesquels les monomères résiduels n'ayant pas réagi ; en ce que la teneur des préparations aqueuses en constituants volatils non-aqueux est inférieure à 0,1 % en poids par rapport à la quantité totale de substances non-volatiles, et en ce que le pH des préparations aqueuses est compris entre 5,5 et 10.

**2.** Procédé selon la revendication 1, caractérisé en ce que le copolymère en dispersion de résines contient des motifs monomères appartenant a l'ensemble des motifs ester vinylique, ester vinylique/éthylène, ester vinylique/chlorure de vinyle/éthylène, ester vinylique/esters vinyliques des acides versatiques, ester vinylique/ester acrylique, ester acrylique/esters vinyliques des acides versatiques/éthylène.

**3.** Procédé selon les revendications 1 et/ou 2, caractérisé en ce que le copolymère en dispersion de résines contient en tant que motifs monomères hydrolysables de formule I des composés choisis parmi l'ensemble comprenant les composés suivants : γ-acryloxypropyl-triméthoxysilane, γ-méthacryloxypropyl-triméthoxysilane, vinyl-triméthoxysilane, vinyl-triéthoxysilane, vinyl-triméthylglycolsilane, vinyl-triacétoxysilane, vinyl-trichlorosilane, vinylméthyldichlorosilane et γ-méthacryloxypropyltris-(méthoxy-2-éthoxy)-silane.

**4.** Procédé selon l'une ou plusieurs des revendications 1 à 3, caractérisé en ce que le copolymère en dispersion de résines est constitué de mélanges de copolymères en dispersion, dont une partie ne contient pas de motifs monomères de formule I et une autre partie contient des motifs monomères de formule I en une quantité telle que la teneur moyenne de la totalité du mélange de copolymères en dispersion en motifs monomères de formule I est de 0,05 à 2 % en poids par rapport à la totalité du

mélange de copolymères en dispersion de résines.

**5.** Procédé selon l'une ou plusieurs des revendications 1 à 4, caractérisé en ce que la granulométrie moyenne des particules de copolymères en dispersion de résines est d'au moins 0,1 µm ou plus.

**6.** Procédé selon l'une ou plusieurs des revendications 1 à 5, caractérisé en ce que les préparations aqueuses sont exemptes de monomères résiduels, d'alcools inférieurs, ainsi que d'ammoniac et/ou d'amines volatiles ou de composants qui éliminent éventuellement du $H_2S$ ou des mercaptans, et que la teneur des préparations aqueuses en constituants volatils non-aqueux est en tout inférieure à 0,05 % en poids par rapport à la totalité des composants non-volatils.

**7.** Procédé selon l'une ou plusieurs des revendications 1 à 6, caractérisé en ce que le copolymère en dispersion de résines contenu dans les préparations aqueuses et portant des résidus siliciés provenant de motifs monomères de formule I, a été préparé par copolymérisation, amorcée par des amorceurs radicalaires, des monomères finement divisés avec de 0,05 à 2 % en poids, par rapport à la quantité totale des monomères, de monomères de formule I en milieu aqueux, avec utilisation simultanée d'hydroxyéthylcellulose, d'émulsifiants non-ioniques et de vinylsulfonate de sodium monomère servant de système émulsifiant/colloïde protecteur, et en ce que les composants alcools volatils éventuellement formés par hydrolyse à partir des motifs monomères de formule I dans la dispersion aqueuse, ainsi que les fractions monomères résiduelles volatiles éventuellement présentes ont été, après la fin de la réaction de polymérisation, éliminés par distillation sous pression réduite.

**8.** Utilisation des préparations aqueuses, obtenues selon l'une ou plusieurs des revendications 1 à 7, en tant que produits pour la protection des ouvrages de construction et/ou en tant que matériaux de construction.